# EUROPEAN PATENT SPECIFICATION

(11) **EP 4 333 390 B1**
(45) Date of publication and mention of the grant of the patent: **26.11.2025**
(21) Application number: 21943921.3
(22) Date of filing: 17.12.2021
(51) Int. Cl.: H04L 45/00, H04L 45/50, H04L 45/741, H04L 12/46, H04L 45/74

(54) **PACKET PROCESSING METHOD, APPARATUS AND SYSTEM**
PAKETVERARBEITUNGSVERFAHREN, -VORRICHTUNG UND -SYSTEM
PROCÉDÉ, APPAREIL ET SYSTÈME DE TRAITEMENT DE PAQUETS

(30) Priority: 31.05.2021 CN 202110604888; 11.06.2021 CN 202110655978
(43) Date of publication of application: 06.03.2024
(73) Proprietor: Huawei Technologies Co., Ltd., Longgang Shenzhen, Guangdong 518129 (CN)
(72) Inventor: ZHANG, Yongkang, Shenzhen, Guangdong 518129 (CN); WU, Peng, Shenzhen, Guangdong 518129 (CN)
(74) Representative: MERH-IP Matias Erny Reichl Hoffmann Patentanwälte PartG mbB
(86) International application number: PCT/CN2021/139368
(87) International publication number: WO 2022/252569

(56) References cited:
- WO-A1-2019/005949
- WO-A1-2020/225092
- CN-A- 109 962 847
- CN-A- 111 988 266
- CN-A- 112 104 552
- CN-A- 112 787 927
- CN-A- 112 787 931

## Description

### TECHNICAL FIELD

This application relates to the field of communication technologies, and in particular, to a packet processing method and apparatus, and a system.

### BACKGROUND

A service function chain (service function chain, SFC) is an ordered service function set. A basic principle of the SFC is as follows: Traffic passes through a plurality of service function (service function, SF) devices in a specified sequence, and the plurality of SF devices process a packet in sequence, to complete a service processing procedure. Segment routing (segment routing, SR) is a technology that is based on source routing and that is used for packet forwarding. A packet of an SR-based forwarded packet includes a segment routing header, and a segment identifier (segment ID, SID) list in the segment routing header indicates a forwarding path of the packet. In a related technology, a dynamic proxy manner is used to support an SR-based SFC. The dynamic proxy manner mainly includes stripping a segment routing header, buffering the segment routing header, re-encapsulating the segment routing header, and the like. Specifically, after a service function forwarder (service function forwarder, SFF) receives a packet including a segment routing header, the SFF strips the segment routing header from the packet, and generates a buffer space to store the stripped segment routing header. Then, the SFF sends the packet whose segment routing header is stripped to an SF. After receiving a packet returned by the SF, the SFF obtains the previously stripped segment routing header from the buffer space. The SFF re-encapsulates the segment routing header in the packet returned by the SF, and continues to forward a re-encapsulated packet. When the dynamic proxy manner is used to support the SFC, the SFF needs to generate and maintain a buffer space, resulting in huge resource overheads.

WO2019/005949A1 discloses a Segment Routing, SR, gateway receives Segment Routing packets encapsulating native packets. The Segment Routing gateway stores the Segment Routing encapsulating headers. The native packets are communicated to a service function. Upon return, Segment Routing packets are generated including the returned native packets using correspondingly stored Segment Routing encapsulating headers, possibly updated with new policies. Segment Routing includes SRv6 and SR-MPLS. The native packet is sent from a physical interface of the SR gateway to the service function, and returned to the SR gateway on one of its physical interfaces. Shared storage is accessible to both the SR gateway and the service function.
CN112787927 A discloses that a SR proxy receives packets and then the SR proxy processes the packets to perform subsequent forwarding. Therein, the packets include IPv6 header that is placed before Segment Routing Header, SRH, and payload.

### SUMMARY

The present invention is defined by the independent claims. In the following, parts of the description and drawings referring to examples which do not necessarily comprise all features of the invention as currently claimed are not represented as embodiments of the invention but as examples useful for understanding the embodiments of the invention. Embodiments of this application provide a packet processing method and apparatus, and a system, to reduce resource overheads.

According to a first aspect, a packet processing method is provided. An SFF receives a first packet, obtains a second packet based on the first packet, and sends the second packet to an SF. The first packet includes a first segment routing (segment routing, SR) header, a first internet protocol (internet protocol, IP) header, and a first IP payload (IP payload), and the first segment routing header is encapsulated in an outer layer of the first IP header and the first IP payload. The second packet includes a second IP header, the first IP payload, and the first segment routing header, and the second IP header is encapsulated in an outer layer of the first IP payload and the first segment routing header.

According to the method, when receiving a packet in an SR encapsulation format, an SFF modifies the encapsulation format of the packet, encapsulates an IP header in the packet in an outer layer of an SR header, and sends a modified packet to an SF device. In a process in which the packet is forwarded from the SFF to the SF device, the packet still carries the SR header. Therefore, when the packet is subsequently returned from the SF device to the SFF, the SFF can restore the original SR encapsulation format by using the SR header carried in the packet. In this way, a limitation that a buffer space used to store an SRH needs to be generated and maintained before an SR encapsulation format can be restored is eliminated, huge resource overheads caused by generating and maintaining the buffer space used to store the SRH are avoided, and resource overheads are reduced.

In some embodiments, the first segment routing header includes a first segment identifier (segment ID, SID). The SFF stores a first correspondence, the first correspondence includes the first SID and a SID type, and the SID type indicates that the segment routing header is not supported. That the SFF obtains a second packet based on the first packet includes: The SFF obtains the SID type based on the first SID and the first correspondence, and performs first processing on the first packet based on the SID type to obtain the second packet. The first processing includes: setting the first segment routing header behind the first IP payload, and replacing the first IP header with the second IP header.

The foregoing implementation matches and is compatible with processing logic of querying a local SID table based on an active SID in an SR protocol. Therefore, the processing logic of the SR protocol can be reused, a requirement on an SFF is reduced, and implementation complexity is low.

In some embodiments, the first SID is a segment routing over internet protocol version 6 (internet protocol version 6 for segment routing, SRv6) SID.

In some embodiments, that the SFF obtains the SID type based on the first SID and the first correspondence includes: When determining that a destination address in an IPv6 basic header in the first segment routing header includes the first SID, the SFF obtains the SID type based on the first SID and the first correspondence.

In some embodiments, the first SID is a multi-protocol label switching (multi-protocol label switching, MPLS) label.

In some embodiments, that the SFF obtains the SID type based on the first SID and the first correspondence includes:
When determining that a topmost label of a label stack in the first segment routing header is the first SID, the SFF obtains the SID type based on the first SID and the first correspondence.

This embodiment supports implementation of a service function chain in a plurality of cases. The following provides descriptions by using an example with reference to case 1 to case 4.

Case 1: The first segment routing header is an SRv6 header, the first IP header and the second IP header both are internet protocol version 4 (internet protocol version 4, IPv4) IPv4 headers, and the first IP payload is an IPv4 payload.

According to the case 1, the implementation of the service function chain in a case of accessing an IPv4 SF device by an SFF in an SRv6 scenario is supported.

Case 2: The first segment routing header is an SRv6 header, the first IP header and the second IP header both are internet protocol version 6 (internet protocol version 6, IPv6) IPv6 headers, and the first IP payload is an IPv6 payload.

According to the case 2, the implementation of the service function chain in a case of accessing an IPv6 SF device by an SFF in an SRv6 scenario is supported.

Case 3: The first segment routing header is an SR-MPLS header, the first IP header and the second IP header both are IPv4 headers, and the first IP payload is an IPv4 payload.

According to the case 3, the implementation of the service function chain in a case of accessing an IPv4 SF device by an SFF in an SR-MPLS scenario is supported.

Case 4: The first segment routing header is an SR-MPLS header, the first IP header and the second IP header both are IPv6 headers, and the first IP payload is an IPv6 payload.

According to the case 4, the implementation of the service function chain in a case of accessing an IPv6 SF device by an SFF in an SR-MPLS scenario is supported.

The second packet has a plurality of possible formats. The following provides descriptions by using an example with reference to three formats.

Format 1: An Ethernet header (Ethernet header) is further encapsulated in an outer layer of an IP header in the second packet.

For example, the second packet further includes a first Ethernet header, and the first Ethernet header is encapsulated in an outer layer of the second IP header. The first Ethernet header includes one or two virtual local area network (virtual local area network, VLAN) tags (VLAN tags), for example, dot1q (namely, 802.1q) or QinQ (namely, 802.1Q-in-802.1Q, characterized by including two 802.1Q tags: one public network tag and one private network tag).

The format 1 is used to support a network deployment scenario in which an SFF and an SF are connected through a layer 2 network.

Format 2: The second IP header in the second packet is a packet header encapsulated in an outermost layer.

The format 2 is used to support a network deployment scenario in which an SFF and an SF are connected through an IP network.

Format 3: A tunnel header (tunnel header) is further encapsulated in an outer layer of an IP header in the second packet.

For example, the second packet further includes a first tunnel header, and the first tunnel header is encapsulated in an outer layer of the second IP header. Encapsulation types of the first tunnel header include but are not limited to a virtual extensible local area network (virtual extensible local area network, VXLAN) encapsulation, a generic routing encapsulation (generic routing encapsulation, GRE), a VXLAN generic protocol encapsulation (VXLAN generic protocol encapsulation, VXLAN-GPE), a generic network virtualization encapsulation (generic network virtualization encapsulation, GENEVE), and the like.

The format 3 is used to support a network deployment scenario in which an SFF and an SF device are connected through an explicit tunnel.

In some embodiments, after sending the second packet to the SF device, the SFF receives a third packet from the SF device. The third packet includes a third IP header, a second IP payload, and the first segment routing header, and the third IP header is encapsulated in an outer layer of the second IP payload and the first segment routing header. The SFF obtains a fourth packet based on the third packet. The fourth packet includes the first segment routing header, a fourth IP header, and a third IP payload, and the first segment routing header is encapsulated in an outer layer of the fourth IP header and the third IP payload. The SFF sends the fourth packet based on the first segment routing header.

According to the foregoing manner, an SFF is supported in restoring an encapsulation format of a packet returned by an SF device to the encapsulation format of the SR packet, so that data obtained through service processing by the SF device is transmitted to a next node in a service function chain based on a specified path by using SR.

The third packet has a plurality of possible formats. The following provides descriptions by using an example with reference to three formats.

Format 1: An Ethernet header is further encapsulated in an outer layer of an IP header in the third packet.

For example, the third packet further includes a second Ethernet header, and the second Ethernet header is encapsulated in an outer layer of the third IP header.

Format 2: An IP header in the third packet is a packet header encapsulated in an outermost layer.

Format 3: A tunnel header (tunnel header) is further encapsulated in an outer layer of an IP header in the third packet.

For example, the third packet further includes a second tunnel header, and the second tunnel header is encapsulated in an outer layer of the third IP header.

In some embodiments, that the SFF obtains a fourth packet based on the third packet includes:
The SFF performs second processing on the third packet based on the third IP header, to obtain the fourth packet. The second processing includes: replacing the third IP header with the fourth IP header, and encapsulating the first segment routing header in the outer layer of the fourth IP header and the third IP payload.

Alternatively, the SFF performs second processing on the third packet based on an interface for receiving the third packet, to obtain the fourth packet. The interface for receiving the third packet is an inbound interface bound to the first SID, and the second processing includes: replacing the third IP header with the fourth IP header, and encapsulating the first segment routing header in the outer layer of the fourth IP header and the third IP payload.

Alternatively, the SFF performs second processing on the third packet based on the third IP header and an interface for receiving the third packet, to obtain the fourth packet. The interface for receiving the third packet is an inbound interface bound to the first SID, and the second processing includes: replacing the third IP header with the fourth IP header, and encapsulating the first segment routing header in the outer layer of the fourth IP header and the third IP payload.

According to the foregoing manner, the SFF is supported in identifying a packet in a specific format in a manner such as using an inbound interface, adding new information to an IP header, or the like, to improve flexibility.

In some embodiments, the third IP header further includes first length information, and the first length information is used to determine a location of the first segment routing header in the third packet.

Optionally, the first length information indicates a length of the first IP payload, or indicates a sum of lengths of the first IP payload and the second IP header.

By including length information in an IP header, an SFF can accurately locate a location of a segment routing header by using the length information, to restore an SR encapsulation format, and reduce implementation complexity of restoring the SR encapsulation format.

In some embodiments, the third IP header includes identification information, and the identification information identifies that the third IP header is encapsulated in the outer layer of the second IP payload and the first segment routing header.

Identification information is introduced to identify a packet encapsulation format provided in this embodiment, so that an SFF determines, based on whether an IP header carries the identification information, whether to restore an SR encapsulation format, to improve flexibility.

In some embodiments, the third IP header includes a second option, a type field of the second option carries the identification information, and a value field of the second option carries the first length information.

In some embodiments, the third IP header is an IPv4 header, and the second option is an option in the IPv4 header.

In some embodiments, the third IP header is an IPv6 header including a hop-by-hop options header, and the second option is an option in the hop-by-hop options header.

Alternatively, the third IP header is an IPv6 header including a destination options header, and the second option is an option in the destination options header.

In some embodiments, the second IP header includes identification information, and the identification information identifies that the first segment routing header is set behind the first IP payload.

In some embodiments, the second IP header further includes second length information, and the second length information indicates the length of the first IP payload, or indicates the sum of the lengths of the first IP payload and the second IP header.

In the foregoing implementation, an SFF includes length information in an IP header to record a length of an IP payload. Therefore, it is not only convenient for an SF device to locate a location of the IP payload during service processing, but also convenient for the SFF to restore an SR encapsulation format. This reduces overall implementation complexity of the solution.

In some embodiments, the second IP header includes a first option, and a type field of the first option carries the identification information.

In some embodiments, a value field of the first option carries the second length information.

In some embodiments, the second IP header is an IPv6 header including a hop-by-hop options header, and the first option is an option in the hop-by-hop options header.

Alternatively, the second IP header is an IPv6 header including a destination options header, and the first option is an option in the destination options header.

In some embodiments, the second IP header is an IPv4 header, and the first option is an option in the IPv4 header.

According to a second aspect, a packet processing method is provided. In the method, an SF device receives a first packet from an SFF. The first packet includes a first IP header, a first IP payload, and a first segment routing header, and the first IP header is encapsulated in an outer layer of the first IP payload and the first segment routing header. The SF device performs service processing based on the first packet.

In the foregoing method, an IP header in a packet is encapsulated in an outer layer of an SR header, so that when receiving the packet, an SF device can ignore the SR header and perform service processing. This helps an SF device that does not support SR provide a service processing service, to implement a service function chain. Especially, in a process in which the packet is forwarded from the SFF to the SF device, the packet still carries the SR header. Therefore, when the packet is subsequently returned from the SF device to the SFF, the SFF can restore an original SR encapsulation format by using the SR header carried in the packet. In this way, a limitation that a buffer space used to store an SRH needs to be generated and maintained before an SR encapsulation format can be restored is eliminated, huge resource overheads caused by generating and maintaining the buffer space used to store the SRH are avoided, and resource overheads are reduced.

In some embodiments, the first IP header includes identification information, and the identification information identifies that the first segment routing header is set behind the first IP payload.

In some embodiments, the first IP header further includes second length information, and the second length information indicates a length of the first IP payload, or indicates a sum of lengths of the first IP payload and the first IP header.

In some embodiments, the first IP header includes a first option, and a type field of the first option carries the identification information.

In some embodiments, the first IP header is an IPv4 header, and the first option is an option in the IPv4 header.

In some embodiments, the first IP header is an IPv6 header including a hop-by-hop options header, and the first option is an option in the hop-by-hop options header.

Alternatively, the first IP header is an IPv6 header including a destination options header, and the first option is an option in the destination options header.

In some embodiments, after that the SF device performs service processing based on the first packet, the method further includes:
The SF device sends, to the SFF, a second packet obtained through the service processing. The second packet includes a second IP header, a second IP payload, and the first segment routing header, and the second IP header is encapsulated in an outer layer of the second IP payload and the first segment routing header.

In some embodiments, the second IP header further includes first length information, and the first length information is used to determine a location of the first segment routing header in the second packet.

In some embodiments, the second IP header includes the first option.

In some embodiments, the second IP header includes the identification information.

According to a third aspect, a packet processing apparatus is provided. The packet processing apparatus is disposed in an SFF (SR proxy), and has a function of implementing the first aspect or any optional manner of the first aspect. The packet processing apparatus includes at least one unit, and the at least one unit is configured to implement the method provided in the first aspect or any optional manner of the first aspect. In some embodiments, a unit in the packet processing apparatus is implemented by using software, and is a program module. In some other embodiments, a unit in the packet processing apparatus is implemented by using hardware or firmware. For specific details of the packet processing apparatus provided in the third aspect, refer to the first aspect or any optional manner of the first aspect. Details are not described herein again.

According to a fourth aspect, a packet processing apparatus is provided. The packet processing apparatus is disposed in an SF device, and has a function of implementing the second aspect or any optional manner of the second aspect. The packet processing apparatus includes at least one unit, and the at least one unit is configured to implement the method provided in the second aspect or any optional manner of the second aspect. In some embodiments, a unit in the packet processing apparatus is implemented by using software, and is a program module. In some other embodiments, a unit in the packet processing apparatus is implemented by using hardware or firmware. For specific details of the packet processing apparatus provided in the fourth aspect, refer to the second aspect or any optional manner of the second aspect. Details are not described herein again.

According to a fifth aspect, a computer device is provided. The computer device is disposed in an SFF (SR proxy), and includes a processor and a network interface. The processor is configured to execute instructions, to enable the computer device to perform the method provided in the first aspect or any optional manner of the first aspect, and the network interface is configured to receive or send a packet. For specific details of the computer device provided in the fifth aspect, refer to the first aspect or any optional manner of the first aspect. Details are not described herein again.

According to a sixth aspect, a computer device is provided. The computer device is disposed in an SF device, and includes a processor and a network interface. The processor is configured to execute instructions, to enable the computer device to perform the method provided in the second aspect or any optional manner of the second aspect, and the network interface is configured to receive or send a packet. For specific details of the computer device provided in the sixth aspect, refer to the second aspect or any optional manner of the second aspect. Details are not described herein again.

According to a seventh aspect, a computer-readable storage medium is provided. The storage medium stores at least one instruction, and when the instruction is run on a computer, the computer is enabled to perform the method provided in the first aspect or any optional manner of the first aspect.

According to an eighth aspect, a computer-readable storage medium is provided. The storage medium stores at least one instruction, and when the instruction is run on a computer, the computer is enabled to perform the method provided in the second aspect or any optional manner of the second aspect.

According to a ninth aspect, a computer program product is provided. The computer program product includes one or more computer program instructions, and when the computer program instructions are loaded and run by a computer, the computer is enabled to perform the method provided in the first aspect or any optional manner of the first aspect.

According to a tenth aspect, a computer program product is provided. The computer program product includes one or more computer program instructions, and when the computer program instructions are loaded and run by a computer, the computer is enabled to perform the method provided in the second aspect or any optional manner of the second aspect.

According to an eleventh aspect, a chip is provided, including a memory and a processor. The memory is configured to store computer instructions, and the processor is configured to invoke the computer instructions from the memory and run the computer instructions, to perform the method in the first aspect and any possible implementation of the first aspect.

According to a twelfth aspect, a chip is provided, including a memory and a processor. The memory is configured to store computer instructions, and the processor is configured to invoke the computer instructions from the memory and run the computer instructions, to perform the method provided in the second aspect or any optional manner of the second aspect.

According to a thirteenth aspect, a network device is provided. The network device is disposed in an SFF (SR proxy), and includes a main control board and an interface board. The main control board includes a first processor and a first memory. The interface board includes a second processor, a second memory, and an interface card. The main control board is coupled to the interface board.

The second memory may be configured to store program code. The second processor is configured to invoke the program code in the second memory, to trigger the interface card to perform the following operation: receiving a first packet. The first packet includes a first segment routing header, a first IP header, and a first IP payload, and the first segment routing header is encapsulated in an outer layer of the first IP header and the first IP payload.

The first memory may be configured to store program code. The first processor is configured to invoke the program code in the first memory to perform the following operation: obtaining a second packet based on the first packet. The second packet includes a second IP header, the first IP payload, and the first segment routing header, and the second IP header is encapsulated in an outer layer of the first IP payload and the first segment routing header.

The second processor is further configured to invoke the program code in the second memory, to trigger the interface card to perform the following operation: sending the second packet to an SF device.

In a possible implementation, an inter-process communication (inter-process communication, IPC) channel is established between the main control board and the interface board, and the main control board communicates with the interface board through the IPC channel.

According to a fourteenth aspect, a network device is provided. The network device is disposed in an SF device, and includes a main control board and an interface board. The main control board includes a first processor and a first memory. The interface board includes a second processor, a second memory, and an interface card. The main control board is coupled to the interface board.

The second memory may be configured to store program code. The second processor is configured to invoke the program code in the second memory, to trigger the interface card to perform the following operation: receiving a first packet from an SFF. The first packet includes a first IP header, a first IP payload, and a first segment routing header, and the first IP header is encapsulated in an outer layer of the first IP payload and the first segment routing header.

The first memory may be configured to store program code, and the first processor is configured to invoke the program code in the first memory to perform the following operation: performing service processing based on the first packet.

In a possible implementation, an IPC channel is established between the main control board and the interface board, and the main control board communicates with the interface board through the IPC channel.

According to a fifteenth aspect, a system is provided. The system includes the apparatus disposed in an SFF provided in the third aspect and the apparatus disposed in an SF device provided in the fourth aspect. Alternatively, the network system includes the computer device disposed in an SFF provided in the fifth aspect and the computer device disposed in an SF device provided in the sixth aspect. Alternatively, the network system includes the network device disposed in an SFF provided in the thirteenth aspect and the network device disposed in an SF provided in the fourteenth aspect.

### BRIEF DESCRIPTION OF DRAWINGS

FIG. 1 is a schematic diagram of a format of an SRv6 packet according to an embodiment of this application;
FIG. 2 is a schematic diagram of a format of an SR-MPLS packet according to an embodiment of this application;
FIG. 3 is a schematic diagram of a format of an IPv4 header according to an embodiment of this application;
FIG. 4 is a schematic diagram of a format of an IPv6 header according to an embodiment of this application;
FIG. 5 is a schematic diagram of an architecture of an SR SFC according to an embodiment of this application;
FIG. 6 is a schematic diagram of a typical scenario of an SFC according to an embodiment of this application;
FIG. 7 is a flowchart of a packet processing method according to an embodiment of this application;
FIG. 8 is a schematic diagram of a format of an IPv4 option according to an embodiment of this application;
FIG. 9 is a flowchart of a packet processing method according to an embodiment of this application;
FIG. 10 is a flowchart of a packet processing method according to an embodiment of this application;
FIG. 11 is a flowchart of a packet processing method according to an embodiment of this application;
FIG. 12 is a flowchart of a packet processing method according to an embodiment of this application;
FIG. 13 is a schematic diagram of a structure of an SFF according to an embodiment of this application;
FIG. 14 is a schematic diagram of a structure of an SF according to an embodiment of this application;
FIG. 15 is a schematic diagram of a structure of a device according to an embodiment of this application; and
FIG. 16 is a schematic diagram of a structure of a device according to an embodiment of this application.

### DESCRIPTION OF EMBODIMENTS

To make objectives, technical solutions, and advantages of this application clearer, the following further describes implementations of this application in detail with reference to the accompanying drawings.

The following explains and describes some terms and concepts in embodiments of this application.

### (1) Segment routing (segment routing, SR)

The SR is a tunneling technology based on a source routing forwarding mode. A basic design idea of the SR is that a per-flow status (namely, an SR policy) needs to be maintained on a head node (of an SR tunnel) of a service flow, and does not need to be maintained on a transit node and a tail node. The SR tunnel can be established in a distributed or centralized manner. The distributed manner refers to a manner in which an intermediate system to intermediate system (Intermediate system to intermediate system, IS-IS), the open shortest path first (open shortest path first, OSPF) protocol, or the border gateway protocol (Border Gateway Protocol, BGP) is used to advertise a segment identifier (segment ID, SID). The centralized manner refers to a manner in which an SDN controller (English: SDN controller) collects and computes a path by using a border gateway protocol-link state (border gateway protocol-link state, BGP-LS) or the path computation element communication protocol (path computation element communication protocol, PCEP). The head node can specify a SID list (SID list) of the SR tunnel in two manners: an explicit candidate path (explicit candidate path) and a dynamic candidate path (dynamic candidate path). For details, see draft-ietf-spring-segment-routing-policy-13. To shield topology details of some networks and avoid a problem of insufficient hardware chip MSD specifications, a binding SID (binding SID, BSID) may be used to steer (steer) traffic to the SR policy.

The SR includes two data planes: multi-protocol label switching (multi-protocol label switching, MPLS) and internet protocol version 6 (internet protocol version 6, IPv6), which are respectively referred to as SR-MPLS and SRv6. The SRv6 has universal characteristics of the SR. In addition, compared with the SR-MPLS, the SRv6 is most outstanding in supporting network programming (RFC8986), which makes the SRv6 highly extendable. The SRv6 is applicable to various application scenarios. For example, the SRv6 may implement the border gateway protocol (border gateway protocol, BGP), an SR layer 3 virtual private network (SR layer 3 virtual private network, SR L3 VPN), an Ethernet virtual private network layer 2 virtual private network (Ethernet virtual private network layer 2 VPN, EVPN L2 VPN), an Ethernet virtual private network layer 3 virtual private network (Ethernet virtual private network layer 3 VPN, EVPN L3 VPN), an SFC, or the like.

### (2) SR packet

The SR packet includes an SR header and an internet protocol (internet protocol, IP) packet. The SR header is encapsulated in an outer layer of an IP header and an IP payload. In other words, in a sequence from the packet header to the packet tail, in the SR packet, the SR header is first, then the IP header, and then the IP payload. The SR packet includes but is not limited to an SRv6 packet and an SR-MPLS packet.

The SR header is usually added to a packet by the head node of the SR tunnel. The SR header includes path information of the SR tunnel. For example, the SR header includes information (for example, a SID or a label) about at least one node or at least one link in the SR tunnel.

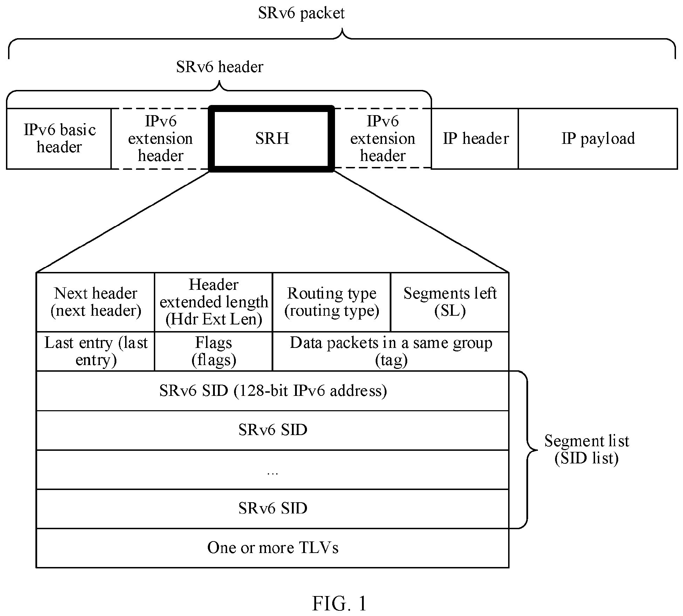

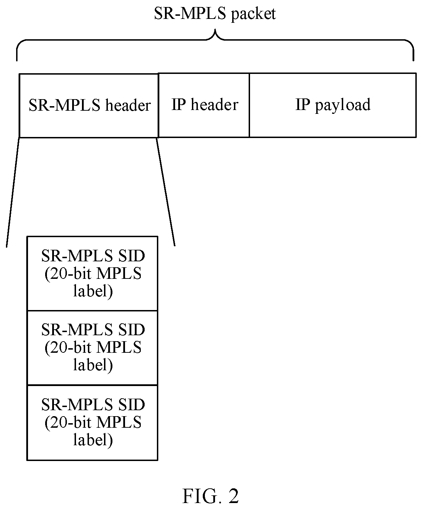

There are a plurality of cases of the SR header in the SR packet. When the SR packet is an SRv6 packet, the SR header in the SR packet is an SRv6 header. The SRv6 header includes an IPv6 basic header and an SRH, and optionally, further includes one or more IPv6 extension headers. For example, FIG. 1 is a schematic diagram of a format of an SRv6 packet. For a specific format of the SRv6 header, refer to FIG. 1. When the SR packet is an SR-MPLS packet, the SR header in the SR packet is an SR-MPLS header. For example, FIG. 2 is a schematic diagram of a format of an SR-MPLS packet. For a specific format of the SR-MPLS header, refer to FIG. 2.

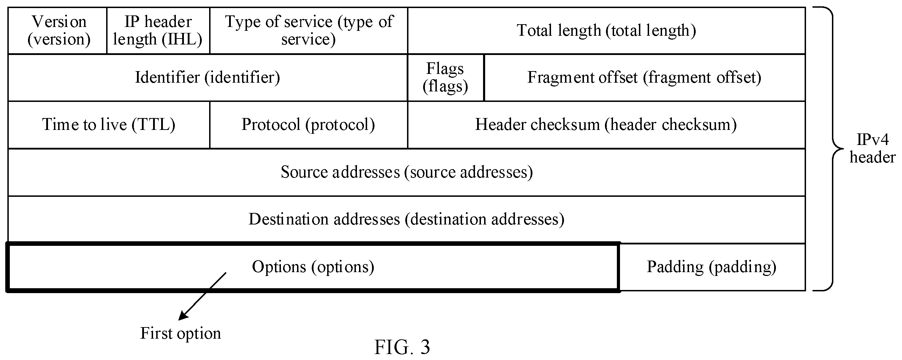

The IP packet is sometimes referred to as a data packet, a service packet, or an original packet. The IP payload includes service data. The IP packet includes but is not limited to an IPv4 packet or an IPv6 packet. When the IP packet is an IPv4 packet, the IP header is specifically an IPv4 header. For example, FIG. 3 is a schematic diagram of a format of an IPv4 header. For a specific format of the IPv4 header, refer to FIG. 3.

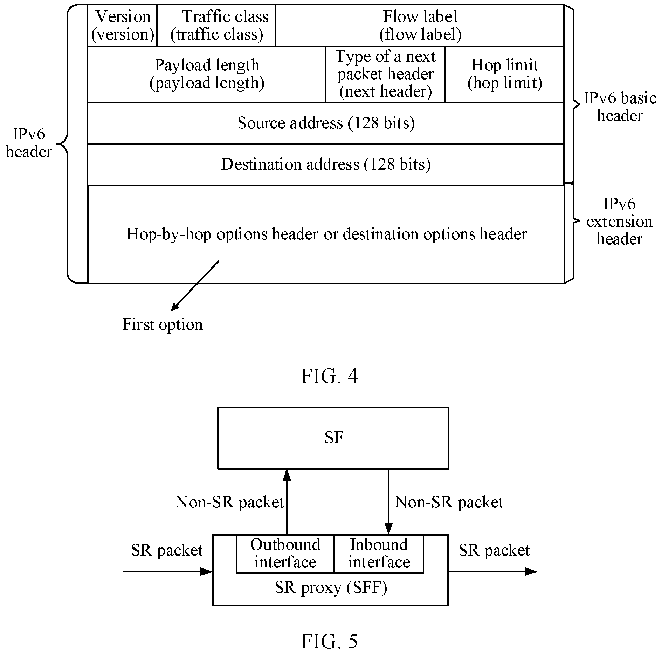

When the IP packet is an IPv6 packet, the IP header is specifically an IPv6 header. The IPv6 header includes at least an IPv6 basic header, and optionally, further includes an IPv6 extension header. For example, FIG. 4 is a schematic diagram of a format of an IPv6 header. For a specific format of the IPv6 header, refer to FIG. 4.

### (3) Segment routing header (segment routing header, SRH)

The SRH is an IPv6 extension header, specifically, an IPv6 routing header (IPv6 routing header) whose routing type (routing type) is 4. The SRH is defined by IETF 6man WG. The SRH includes a SID list (SID list), which is used to specify a forwarding path of an IPv6 packet. The SRH (RFC8754) uses a loose source routing mode. To be specific, not all hops on a forwarding path are required to support and parse the SRH, and not all hop nodes on the forwarding path are required to be included in the SID list in the SRH. Optionally, an SRv6 tunnel packet may not include the SRH.

As shown in FIG. 1, the SRH includes a next header (next header) field, a header extended length (header extended length, Hdr Ext Len) field, a routing type (routing type) field, a segments left (segments left, SL) field, a last entry (last entry) field, a flags (flags) field, a tag field, a segment identifier list (SID list), and the like. The following explains and describes some fields in the SRH.

The next header field identifies a type of a next packet header of the SRH.

The Hdr Ext Len field indicates a length of the SRH.

The routing type field indicates a type of a routing header. For the SRH, a value of the routing type field is 4.

The SL indicates a quantity of transit nodes that still need to be accessed before a destination node is reached. The SL field functions as a pointer that points to an active SID in the segment list. For example, if the segment list of the SRH includes five SIDs: a SID 0, a SID 1, a SID 2, a SID 3, and a SID 4, and a value of the SL is 2, it indicates that the active SID in the segment list is the SID 2.

The last entry (last entry) indicates an index of the last element in the SID list.

The tag field identifies data packets in a same group.

The segment identifier list (SID list) includes one or more SRv6 SIDs. Each SRv6 SID is in a form of an IPv6 address. Therefore, the segment list is equivalent to an explicit IPv6 address stack. The segment list in the SRv6 is similar to an MPLS label stack in the SR-MPLS.

### (4) IP header length (internet header length, IHL) field

The IHL is a field in the IPv4 header. A length of the IHL field is 4 bits. The IHL field is used to describe a length of the IP header.

### (5) Total length (total length) field

The total length field is a field in the IPv4 header. A length of the total length field is 16 bits. The total length field is used to describe a total length of the IP packet (including the IP header length and an IP payload length).

### (6) IPv4 option

The IPv4 option is a part of the IPv4 header. According to RFC791, a total length of the IPv4 option is 40 bytes (byte, B) (limited by the length of the IHL). The IPv4 option includes two forms: a single-byte option and an option in a form of a type length value (a type length value, TLV). The option in the form of the TLV includes a 1-byte option type field, a 1-byte option length field, and an option data field (also referred to as a value field) whose length is changeable.

The option type field includes a 1-bit copy flag (copy flag), a 2-bit option class (class), and a 5-bit option number (number). The option class is used to describe a function of an option. If a value of the option class is 0, the option is used for control (control). If a value of the option class is 2, the option is used for debugging and measurement (debugging and measurement). Other values of the option class are reserved.

A method of using the IP protocol for experimental purposes is defined in RFC3692. In RFC4727, an experimental parameter value is allocated to a related field of the internet protocol version 4 (internet protocol version 4, IPv4), the internet control message protocol for the IPv4 (internet control message protocol for the IPv4, ICMPv4), the IPv6, the internet control message protocol for the IPv6 (internet control message protocol for the IPv6, ICMPv6), the transmission control protocol (transmission control protocol, TCP), or the user datagram protocol (user datagram protocol, UDP).

For the IPv4 option, option types 30/94/158/222 are reserved as experimental values. The standard allows flexible extension to be performed based on these option types.

### (7) Segment identifier (segment ID, SID)

The SID is a core element of the SR. In [RFC8402 Segment Routing Architecture], a segment (segment) is defined as the following semantics: A segment can represent any instruction, topological or service based. (A SID can indicate any topology, instruction, or service.) The SID uniquely identifies a segment. A SID in the SR-MPLS has a form of an MPLS label, and is usually also referred to as an SR-MPLS SID. A SID in the SRv6 is in a form of an IPv6 address and is usually also referred to as an SRv6 SID (segment identifier).

### (8) SRv6 SID

The SRv6 SID has a form of an IPv6 address. A length of the SRv6 SID is 128 bits. The SRv6 SID mainly includes two parts: locator (locator) and function (function). The locator occupies a high bit of the SRv6 SID, and the function occupies a remaining part of the SRv6 SID. Optionally, the SRv6 SID further includes a parameter (arguments). The locator is used to locate a node that advertises the SRv6 SID. One locator represents one IPv6 network segment, and an IPv6 address on the segment can be allocated as an SRv6 SID. The function represents instructions of a device, and the instructions are preset on the device. The function part indicates the node that advertises the SRv6 SID to perform a corresponding function operation.

Types of the SRv6 SID include an End SID (Endpoint SID, endpoint SID) that identifies a node, an End.X SID (layer 3 cross-connect Endpoint SID) that identifies a layer 3 link, and the like. In some embodiments of this application, the types of the SRv6 SID include a SID type that identifies a proxy (proxy) behavior of editing an SR packet into a packet in a specific format. In the following instance 1, an SRv6 SID of this type is referred to as End.P4 (P indicates proxy, and 4 indicates IPv4 VAS).

### (9) SR-MPLS SID

The SR-MPLS SID has a form of an MPLS label. A length of the SR-MPLS SID is 20 bits. Types of the SR-MPLS SID include a prefix segment (prefix segment) that identifies a prefix of a destination address, an adjacency segment (adjacency segment) that identifies an adjacency, a node segment (node segment) that identifies a node, and the like. In this embodiment, the types of the SR-MPLS SID include a SID type that identifies that an SR packet is edited into a packet in a specific format.

### (10) SF that does not support the SR (SR-unaware SF)

The SF that does not support the SR is an SF that cannot identify an SR encapsulation format. The SF that does not support the SR includes an SF that does not support the SR-MPLS and an SF that does not support the SRv6. When receiving an SR packet, the SF that does not support the SR usually discards the SR packet because the SF cannot identify the SR encapsulation format. This leads to a failure in service processing. Therefore, an SF proxy needs to be configured for the SF that does not support the SR to implement a service function chain.

### (11) Local SID table (local SID table)

The local SID table is a table maintained by an SRv6-enabled node. The local SID table is used to store an SRv6 SID generated by a local node and information associated with the SRv6 SID. For example, the local SID table includes an SRv6 SID, a SID type, and an outbound interface bound to a SID.

### (12) Service function chain (service function chain, SFC)

The SFC is a technology that provides an ordered service for an application layer. The SFC is configured to logically connect services on a network device to form an ordered service set. The SFC adds service function chain path information to an original packet to enable a packet to pass through service functions (service functions, SFs) in sequence along a specified path. When a data packet is transmitted on a network, the data packet usually needs to pass through various SFs, to ensure that the network can provide secure, fast, and stable services for users as planned.

### (13) Service function forwarder (service function forwarder, SFF)

The SFF is configured to forward, based on information encapsulated in the SR header, a packet received from a network to several SFs associated with the SFF. The SF processes the packet and returns the packet to the SFF. The SFF finally determines whether to send the packet back to the network.

### (14) SF

The SF is configured to provide a service processing service. The SF includes but is not limited to a firewall (firewall, FW), a load balancer (load balancer, LB), an intrusion prevention system (intrusion prevention system, IPS), an application accelerator, network address translation (network address translation, NAT), a web application firewall (Web application firewall, WAF, also referred to as a website application-level intrusion prevention system), bandwidth control, virus detection, cloud storage, deep packet inspection (deep packet inspection, DPI), intrusion detection, hyper text transfer protocol (hyper text transfer protocol, HTTP) header enrichment (HTTP header enrichment), and the like. In the service function chain, network traffic needs to pass through the SFs in a specified sequence required by service logic, to implement needed services.

Based on SR encapsulation awareness, the SFs are classified into an SR-aware SF (SR-aware SF) and an SR-unaware SF (SR-unaware SF).

The SR-aware SF can identify and process a received SR packet. In this case, a SID of the SF is orchestrated into a service function chain path to implement the service function chain. The SR-unaware SF does not identify the SR packet and discards a received SR packet. In this scenario, an SF proxy needs to be configured, to implement the service function chain.

### (15) SF proxy (SF proxy)

The SF proxy is configured to process an SR encapsulation in place of the SF. Usually, the SFF acts as the SF proxy. For details about various forms of the SF proxy, refer to section 6 of draft-ietf-spring-sr-service-programming-04. FIG. 5 shows a general architecture of an SR proxy. As shown in FIG. 5, when receiving an SR packet from an upstream node, if the SR proxy finds that an SF does not support SR, the SR proxy converts the SR packet into a non-SR packet. Then, the SR proxy sends the non-SR packet to the SF through an outbound interface connected to the SF. After performing service processing on the received non-SR packet, the SF returns a non-SR packet obtained through the service processing to the SR proxy. When receiving, through an inbound interface connected to the SF, the non-SR packet returned by the SF, the SR proxy converts the non-SR packet into an SR packet and forwards the SR packet to a downstream node.

An SRv6 SFC proxy includes four proxy modes, among which a static proxy (static proxy) and a dynamic proxy (dynamic proxy) are most commonly used.

A static proxy solution is characterized by stripping and discarding an SRv6 header. Specifically, when receiving an SRv6 packet, if an SFF uses a static proxy mode, the SFF strips an SRH from the SRv6 packet, discards the stripped SRH, and forwards a packet that does not include the SRH to the SF. After receiving the packet returned by the SF, the SFF generates an SRv6 header based on a statically configured parameter and encapsulates the generated SRv6 header in the packet returned by the SF to restore an encapsulation format of the SRv6 packet. Then, the SFF continues to forward an encapsulated SRv6 packet.

A dynamic proxy solution is characterized by stripping and caching an SRv6 header. Specifically, when receiving an SRv6 packet, if an SFF uses a dynamic proxy mode, the SFF strips an SRH from the SRv6 packet, generates a dynamic entry for storing the SRH, and caches the generated dynamic entry. The SFF forwards a packet that does not include the SRH to the SF. After receiving the packet returned by the SF, the SFF accesses a cache, queries the dynamic entry in the cache, obtains the stripped SRH from the dynamic entry, encapsulates the SRv6 header in the packet returned by the SF, and forwards an encapsulated SRv6 packet.

However, through research and analysis, it is found that the static proxy solution and the dynamic proxy solution both have defects of different degrees.

For the static proxy solution, because the SFF directly discards the SRv6 header, dynamic information included in the SRv6 header is lost. Therefore, the static proxy solution cannot be used as a universal solution. For example, if the static proxy mode is used, the following items are not supported: a dynamically allocated SRv6 virtual private network (virtual private network, VPN) SID, internet protocol data flow-based channel associated OAM performance measurement (in-situ Flow information Telemetry, iFit), application-aware networking for IPv6 (application-aware networking for IPv6, APN6), and network slicing (network slicing). Therefore, the static proxy mode applies only to a simple and statically configured SRv6 network. In addition, the static proxy solution causes complex configuration. Specifically, when SR encapsulation restoration is performed on the packet returned by the SF, an IPv6 basic header and the SRH both need to be generated by the SFF based on configured parameters. As a result, many parameters (such as a hop limit, a source address, and a destination address) in the IPv6 basic header and many parameters (such as a SID list) in the SRH need to be configured by an administrator on the SFF in advance. This leads to heavy configuration workload and high difficulty.

For the dynamic proxy solution, although the dynamic proxy solution can support an SRv6 dynamic service, a forwarding plane has a status. To be specific, a large quantity of caches need to be occupied to store the SRH. This leads to high implementation complexity and huge resource overheads. Performance (a capacity, a rate, convergence, and the like) is under great pressure. As a result, forwarding performance deteriorates and large-scale deployment is not supported.

In terms of a service requirement, an expected SRv6 SFC proxy behavior should meet the following requirements of two aspects.

In a first aspect, the SRv6 SFC proxy behavior needs to support the SRv6 dynamic service. To be specific, the dynamic information (non-SRv6 SFC-related information) carried in the SRv6 header should not be lost in an SFF (proxy) -->SF-->SFF (proxy) forwarding procedure of an SRv6 packet.

In a second aspect, a data plane of the SFF (proxy) should be stateless (stateless). To be specific, generation and maintenance performed by the data plane on the dynamic entry for caching the SRv6 header needs to be avoided as much as possible.

Currently, there is no feasible solution for an IPv4 SF (namely, an SF that does not support IPv6, which is usually an inventory device on a live network) to meet the foregoing requirements of the two aspects.

The foregoing analyzes an SRv6 SFC scenario. For an SR-MPLS SFC scenario, no feasible solution can meet the foregoing requirements of the two aspects, either.

However, in some embodiments of this application, after receiving an SR packet, the SFF that acts as the SF proxy re-encapsulates the SR packet into a packet in a specified format, and then forwards the packet to the SF. A main characteristic of the packet encapsulation format provided in this embodiment is that a packet carries an SR header, an IP header is encapsulated in an outer layer, and the SR header is encapsulated in an inner layer. Optionally, a packet of this type further carries an option inserted by the SFF. For example, in a scenario in which the SF is an IPv4 SF, and in a sequence from the packet header to the packet tail, components in a packet of this type are sequentially: an optional tunnel header, an IPv4 header, an optional IPv4 option (which is a part of the IPv4 header), an IPv4 payload, and an SR header. In this way, because the SR header is located behind the IPv4 payload, the SF can ignore the SR header during service processing, so that the SR header is transparent to the SF, and a basic requirement of a proxy function is met.

For the requirement of the first aspect, because the SFF does not discard an SR header in a packet when forwarding the packet to the SF, and when the SFF and the SF exchange the packet, the packet exchanged between the SFF and the SF always carries the SR header, the dynamic information included in the SR header is not lost. Therefore, dynamic services of SR-MPLS and SRv6 can be supported, which meets the requirement of the first aspect. For example, in a scenario in which network slicing is supported by using the service function chain, when a packet enters the service function chain, a head node encapsulates an SR header including a slice identifier (slice ID) of a network slice in the packet, so that each SFF in the service function chain forwards the packet by using a resource corresponding to the network slice. If the SFF discards the SR header when forwarding the packet to the SF, the slice identifier carried in the SR header is lost. As a result, a network slicing service is not supported. However, according to the method provided in this embodiment, because the packet forwarded by the SFF to the SF still includes the SR header, the slice identifier carried in the SR header is not lost. Therefore, the network slicing service can be better supported.

For the requirement in the second aspect, because the packet returned by the SF to the SFF includes the SR header, the SF can restore an SR encapsulation by using the SR header in the packet without depending on the dynamic entry for storing the SRH, and a limitation that the dynamic entry for caching the SRH needs to be generated and maintained is eliminated. Therefore, a series of technical problems such as huge resource overheads, performance deterioration, and a limited service scale caused by generation and maintenance of the dynamic entry are resolved, which helps implement a stateless service function chain. For example, a management plane, a control plane, and a data plane are all stateless.

The following describes an application scenario of this embodiment of this application by using an example.

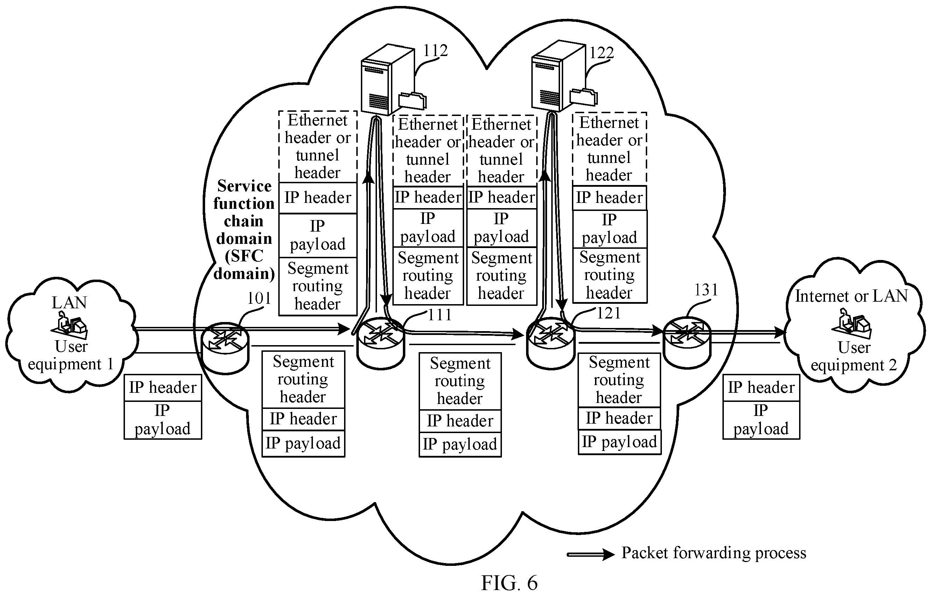

FIG. 6 is a schematic diagram of a typical scenario of an SFC according to an embodiment of this application. FIG. 6 includes a service classifier (service classifier, SC) 101, an SFF 111, an SF 112, an SFF 121, an SF 122, and an egress node 131. Devices included in FIG. 6 can form an SFC domain. The following describes network deployment locations, typical product forms, locations, functions, connection relationships, and the like of devices in FIG. 6 by using an example with reference to (1) to (5).

### (1) SC 101

The SC 101 is deployed at a boundary entry of the SFC domain. The SC 101 is configured to receive a service packet from user equipment, classify the service packet by matching a quintuple or in another manner, and redirect a classified service packet to the SFC domain. A typical product form of the SC 101 is a network device, such as a router or a switch.

In a scenario in which the SFC is implemented based on SR, the SC 101 optionally serves as a head node of an SR tunnel. The SC 101 is configured to encapsulate the service packet into an SR packet, to direct the service packet to the devices in the service function chain by using a segment routing header in the SR packet.

### (2) SFF 111

The SFF 111 is configured to forward a received packet to the SF 112, receive a processed packet returned by the SF 112, and forward the packet processed by the SF 112. A typical product form of the SFF 111 is a network device, such as a router or a switch.

In a scenario in which the SFC is implemented based on the SR, if the SF 112 does not support the SR (in other words, the SF 112 is an SR-unaware SF), the SFF 111 is further configured to serve as a proxy of the SF 112. Specifically, the SFF 111 is configured to encapsulate a received SR packet into a packet in a format supported by the SF 112, and forward the encapsulated packet to the SF 112. When receiving the packet returned by the SF 112, the SFF 111 is further configured to re-encapsulate a packet returned by the SF 112 into an SR packet, to restore an encapsulation format of the SR packet.

### (3) SF 112

The SF 112 has accessed the SFF 111. The SF 112 is configured to perform service processing on the packet sent by the SFF 111, and send a processed packet to the SF 111. A typical product form of the SF 112 includes but is not limited to a server, a host, a personal computer, a firewall, an intrusion detection system, an intrusion prevention system, or the like.

### (4) Connection relationship between the SFF 111 and the SF 112

The SFF 111 and the SF 112 are connected to each other through a wired network or a wireless network. The SFF 111 and the SF 112 transmit packets to each other through a network. A specific network connection mode between the SFF 111 and the SF 112 includes a plurality of cases. The following provides descriptions by using an example with reference to three network connection modes.

Connection mode 1: The SFF 111 and the SF 112 are connected to each other through a layer 2 network.

Specifically, an L2 interface on the SFF 111 is connected to an L2 interface on the SF 112. Optionally, one or more L2 devices (such as layer 2 switches) exist between the SFF and the SF.

In the connection mode 1, a packet exchanged between the SFF 111 and the SF 112 is carried in an Ethernet frame. Specifically, in a process in which the SFF 111 sends a packet to the SF 112, the SFF 111 generates an Ethernet header, and encapsulates the Ethernet header in the packet to obtain the Ethernet frame. The SFF 111 sends the Ethernet frame through a layer 2 interface. The Ethernet frame is forwarded to the layer 2 interface of the SF 112 through the layer 2 network by using layer 2 information such as a media access control (media access control, MAC) address carried in the Ethernet header. After receiving the Ethernet frame through the layer 2 interface, the SF 112 obtains the packet from the Ethernet frame. A procedure of sending the processed packet to the SFF 111 by the SF 112 is similar.

Connection mode 2: The SFF 111 and the SF 112 are connected to each other through an IP network.

In the connection mode 2, a packet exchanged between the SFF 111 and the SF 112 is an IP packet. For example, refer to FIG. 6. After encapsulating an SRv6 packet into an IPv4 packet, the SFF 111 forwards the IPv4 packet to the SF 112 through an IPv4 network.

Connection mode 3: The SFF 111 and the SF 112 are connected to each other through a tunnel (tunnel).

Types of the tunnel between the SFF 111 and the SF 112 include but are not limited to a virtual extensible local area network (virtual extensible local area network, VXLAN) tunnel, a generic routing encapsulation (generic routing encapsulation, GRE) tunnel, a VXLAN generic protocol encapsulation (VXLAN generic protocol encapsulation, VXLAN-GPE) tunnel, a generic network virtualization encapsulation (generic network virtualization encapsulation, GENEVE) tunnel, a mobile IP data encapsulation tunnel (IP-in-IP), and the like.

In the connection mode 3, a packet exchanged between the SFF 111 and the SF 112 includes an IP packet and a tunnel header. In a sequence from the packet header to the packet tail, the tunnel header is first, and then the IP packet.

For example, refer to FIG. 6. The packet exchanged between the SFF 111 and the SF 112 further includes an optional tunnel header. The tunnel header indicates a tunnel between the SFF 111 and the SF 112. The tunnel header is configured to transmit the IPv4 packet between the SFF 111 and the SF 112. The tunnel header includes but is not limited to a VXLAN tunnel header, a GRE tunnel header. an IP-in-IP tunnel header, or the like. In a packet sent by the SFF 111 to the SF 112, a source address in the tunnel header includes an IP address of the SFF 111, and a destination address in the tunnel header includes an IP address of the SF 112. In a packet returned by the SF 112 to the SFF 111, a source address in the tunnel header includes the IP address of the SF 112, and a destination address in the tunnel header includes the IP address of the SFF 111.

The SFF 121 is similar to the SFF 111, and the SF 122 is similar to the SF 112. For details, refer to descriptions of the SFF 111 and the SF 112.

### (5) Egress node 131

The egress node 131 is deployed at a boundary exit of the SFC domain. The egress node 131 is configured to forward, from the SFC domain, the service packets processed by the SF 112 and the SF 122. A typical product form of the egress node 131 is a network device. such as a router or a switch.

In a scenario in which the SFC is implemented based on the SR, the egress node 131 optionally serves as a tail node of the SR tunnel. The SC 101 is configured to decapsulate the SR packet to obtain the service packet.

In FIG. 6, an example in which two SFFs and two SFs are deployed is used for description. More or fewer SFFs or SFs are optionally deployed in one SFC domain. For example, only one SFF or SF is deployed in one SFC domain. For another example, dozens of, hundreds of, or more SFFs or SFs are deployed in one SFC domain. The quantity of SFFs or SFs is not limited in this embodiment.

In FIG. 6, an example in which one SF accesses one SFF (namely, single-homing access) is used for description. Alternatively, one SF accesses two or more SFFs (namely, multi-homing access). A quantity of SFFs accessed by the SF is not limited in this embodiment.

The foregoing describes an overall architecture of the SFC with reference to FIG. 6. The following describes a basic procedure in which the architecture shown in FIG. 6 is used in a case in which an SFF accesses an IPv4 SF in an SRv6 scenario.

After receiving the IPv4 packet sent by user equipment 1, the SC 101 generates an SRv6 header including an IPv6 basic header and an SRH, and encapsulates the SRv6 header in an outer layer of the received IPv4 packet, to obtain an SRv6 packet. The SC 101 forwards the obtained SRv6 packet to the SFF 111. An outer layer of the SRv6 packet is the SRv6 header and an inner layer is the IPv4 packet. A segment list of the SRH in the SRv6 header includes an SRv6 SID of the SFF 111, an SRv6 SID of the SFF 121, and a SID of the egress node 131.

After receiving the SRv6 packet sent by the SC 101, the SFF 111 encapsulates a format of the SRv6 packet into a format of an IPv4 packet (in other words, an IPv4 header is encapsulated in the outer layer of the SRv6 header), and forwards an encapsulated IPv4 packet to the SF 112. After receiving the IPv4 packet sent by the SFF 111, the SF 112 performs service processing based on an IPv4 payload in the IPv4 packet, and returns an IPv4 packet obtained through service processing to the SFF 111. After receiving the processed IPv4 packet returned by the SF 112, the SFF 111 re-encapsulates the IPv4 packet into an SRv6 packet (in other words, the SRv6 header is encapsulated in an outer layer of the IPv4 header), and forwards the SRv6 packet to the SFF 121 based on the SRv6 header. The SFF 121 and the SF 122 perform steps similar to the steps performed by the SFF 111 and the SF 112.

After receiving the SRv6 packet sent by the SFF 121, the egress node 131 strips the SRv6 header from the SRv6 packet to obtain the IPv4 packet. The egress node 131 forwards the IPv4 packet from the SFC domain, and finally the packet arrives at user equipment 2.

The following describes a method procedure in embodiments of this application by using an example.

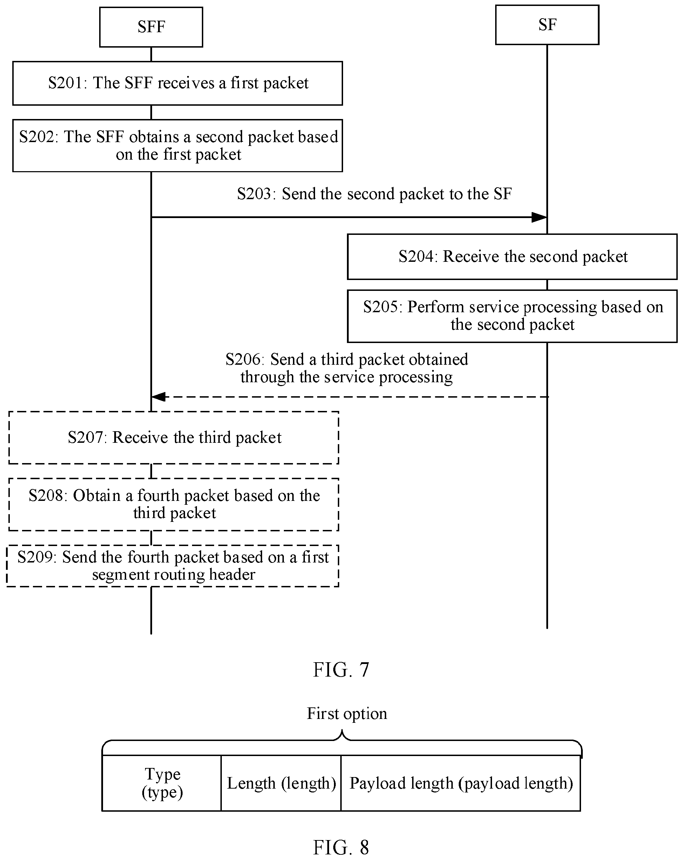

FIG. 7 is a flowchart of a packet processing method according to an embodiment of this application. The method shown in FIG. 7 includes the following step S201 to step S209.

The method shown in FIG. 7 relates to a procedure in which a packet is forwarded from an SFF to an SF and a procedure in which a packet is returned from the SF to the SFF. After a packet passes through the SFF or the SF, content of the packet may change or remain unchanged. To differentiate descriptions, "first packet", "second packet", "third packet", and "fourth packet" are used to describe packets at different stages in a forwarding procedure.

A network deployment scenario on which the method shown in FIG. 7 is based is optionally shown in FIG. 6. For example, with reference to FIG. 6, the SFF in the method shown in FIG. 7 is the SFF 111 in FIG. 6, and the SF in the method shown in FIG. 7 is the SF 112 in FIG. 6. In the method shown in FIG. 7, the first packet is the packet sent by the SC 101 to the SFF 111 in FIG. 6. In the method shown in FIG. 7, the second packet is the packet sent by the SFF 111 to the SF 112 in FIG. 6. In the method shown in FIG. 7, the third packet is the packet sent by the SF 112 to the SFF 111 in FIG. 6. In the method shown in FIG. 7, the fourth packet is the packet sent by the SFF 111 to the SFF 121 in FIG. 6.

The method shown in FIG. 7 has four typical application scenarios: accessing an IPv4 SF by an SFF in an SRv6 SFC proxy scenario, accessing an IPv6 SF by an SFF in the SRv6 SFC proxy scenario, accessing an IPv4 SF by an SFF in an SR-MPLS SFC proxy scenario, and accessing an IPv6 SF by an SFF in the SR-MPLS SFC proxy scenario. When the method is applied to the accessing an IPv4 SF by an SFF in the SRv6 SFC proxy scenario, an outer SR header in a packet is an SRv6 header and an inner IP packet in the packet is an IPv4 packet. When the method is applied to the accessing an IPv6 SF by an SFF in the SRv6 SFC proxy scenario, an outer SR header in a packet is an SRv6 header and an inner IP packet in the packet is an IPv6 packet. When the method is applied to the accessing an IPv4 SF by an SFF in the SR-MPLS SFC proxy scenario, an outer SR header in a packet is an SR-MPLS header and an inner IP packet in the packet is an IPv4 packet. When the method is applied to the accessing an IPv6 SF by an SFF in the SR-MPLS SFC proxy scenario, an outer SR header in a packet is an SR-MPLS header and an inner IP packet in the packet is an IPv6 packet.

Step S201: An SFF receives a first packet.

The first packet is an SR packet. For a concept of SR, refer to (1) in the foregoing term explanation part. The first packet has a format in which an SR header is encapsulated in an outer layer of an IP header and an IP payload. The first packet includes a first segment routing header, a first IP header, and a first IP payload, and the first segment routing header is encapsulated in an outer layer of the first IP header and the first IP payload.

Optionally, with reference to FIG. 6, the first IP header and the first IP payload in the first packet are generated by the user equipment 1 in FIG. 6, and the first SR header is generated and encapsulated in the outer layer of the first IP header and the first IP payload by the SC 101. Specifically, a source address in the first IP header includes the address of the user equipment 1 in FIG. 6, a destination address in the first IP header includes the address of the user equipment 2 in FIG. 6, and the first IP payload includes the service data to be transmitted by the user equipment 1 to the user equipment 2 in FIG. 6. The first SR header includes path information. The path information indicates a forwarding path of the service data in the IP payload in the service function chain domain in FIG. 6. The path information is indicated by a SID on the SFF 111 or a SID on the SFF 121. For example, an upper-layer service requires that the service data should be first processed by an SF 112 and then processed by an SF 122. A first SR header encapsulated by an SC 101 includes a SID allocated by an SFF 111 to a proxy function of the SF 112, a SID allocated by an SFF 121 to a proxy function of the SF 122, and a SID of an egress node 131, to indicate the SFF 111 and the SFF 121 to sequentially forward a packet to the SF 112 and the SF 122.

There are a plurality of possible cases for a specific format of the first packet. The following describes the first packet by using an example with reference to four cases of case 1 to case 4.

Case 1: In the first packet, the SR header is an SRv6 header, and an inner packet is an IPv4 packet.

Specifically, the first segment routing header is the SRv6 header, the first IP header is an IPv4 header, and the first IP payload is an IPv4 payload.

Case 2: In the first packet, the SR header is an SRv6 header, and an inner packet is an IPv6 packet.

Specifically, the first segment routing header is the SRv6 header, the first IP header is an IPv6 header, and the first IP payload is an IPv6 payload.

In the foregoing case 1 and case 2, the first packet, for example, has the encapsulation format shown in FIG. 1.

Case 3: In the first packet, the SR header is an SR-MPLS header, and an inner packet is an IPv4 packet.

Specifically, the first segment routing header is the SR-MPLS header, the first IP header is an IPv4 header, and the first IP payload is an IPv4 payload.

Case 4: In the first packet, the SR header is an SR-MPLS header, and an inner packet is an IPv6 packet.

Specifically, the first segment routing header is the SR-MPLS header, the first IP header is an IPv6 header, and the first IP payload is an IPv6 payload.

In the foregoing case 3 and case 4, the first packet, for example, has the encapsulation format shown in FIG. 2.

Step S202: The SFF obtains a second packet based on the first packet.

Step S203: The SFF sends the second packet to an SF.

When forwarding a packet to the SF, the SFF modifies an encapsulation format of the packet. For example, an SR header in the second packet and the SR header in the first packet are carried in different locations. The SR header in the first packet is encapsulated in the outer layer of the IP header, and the SR header in the second packet is encapsulated in an inner layer of the IP header.

Specifically, the second packet includes a second IP header, a first IP payload, and the first segment routing header, and the second IP header is encapsulated in an outer layer of the first IP payload and the first segment routing header.

There are a plurality of possible cases for a specific format of the second packet. The following describes the second packet by using an example with reference to four cases of case 1 to case 4. When the first packet belongs to the case 1 in step S201, the second packet belongs to a case 1 in step S203. When the first packet belongs to the case 2 in step S201, the second packet belongs to a case 2 in step S203. When the first packet belongs to the case 3 in step S201, the second packet belongs to a case 3 in step S203. When the first packet belongs to the case 4 in step S201, the second packet belongs to a case 4 in step S203.

Case 1: In the second packet, the SR header is an SRv6 header, and an inner packet is an IPv4 packet.

Specifically, the first segment routing header is the SRv6 header, the second IP header is an IPv4 header, and the first IP payload is an IPv4 payload.

Case 2: In the second packet, the SR header is an SRv6 header, and an inner packet is an IPv6 packet.

Specifically, the first segment routing header is the SRv6 header, the second IP header is an IPv6 header, and the first IP payload is an IPv6 payload.

Case 3: In the second packet, the SR header is an SR-MPLS header, and an inner packet is an IPv4 packet.

Specifically, the first segment routing header is the SR-MPLS header, the second IP header is an IPv4 header, and the first IP payload is an IPv4 payload.

Case 4: In the second packet, the SR header is an SR-MPLS header, and an inner packet is an IPv6 packet.

Specifically, the first segment routing header is the SR-MPLS header, the second IP header is an IPv6 header, and the first IP payload is an IPv6 payload.

Optionally, in a process in which the packet is forwarded from the SFF to the SF, the SFF modifies content of one or more fields in the IP header. In other words, content of one or more fields in the second IP header is different from that in the first IP header. The following describes the fields that may have different content in the second IP header and the first IP header by using an example with reference to the following (a) to (d).

### (a) Field indicating an IP payload length

In some embodiments, content of the field indicating the IP payload length in the second IP header is different from that in the first IP header. In other words, the SFF modifies a field indicating an IP payload length in a received packet.

Specifically, a length carried in the field indicating the IP payload length in the second IP header includes a length of the SR header, and a length carried in the field indicating the IP payload length in the first IP header does not include the length of the SR header. For example, optionally, a difference between the length carried in the field indicating the IP payload length in the second IP header and the length carried in the field indicating the IP payload length in the first IP header is a length of the first SR header.

For example, when the IP header is an IPv4 header, a field indicating an IP payload length in the IP header is a total length (total length) field. When an IP header is an IPv6 header, the field indicating the IP payload length in the IP header is a payload length (payload length) field.

### (b) Field indicating an IP header length

Optionally, when the SFF adds a field (for example, a newly added option) to the first IP header in the first packet, content of the field indicating the IP header length in the second IP header is different from that in the first IP header. In other words, the SFF modifies a field indicating an IP header length in a received packet.

Specifically, a length carried in the field indicating the IP header length in the second IP header includes a length of the field added by the SFF. For example, optionally, a difference between the length carried in the field indicating the IP header length in the second IP header and the length carried in the field indicating the IP header length in the first IP header is the length of the field added by the SFF.

For example, when the IP header is an IPv4 header, the field indicating the IP header length in the IP header is an IP header length (IHL).

Alternatively, content of the field indicating the IP header length in the second IP header is the same as that in the first IP header.

### (c) Field used to check an IP header

Optionally, when the SFF adds a field (for example, a newly added option) to the first IP header in the first packet, content of the field used to check the IP header in the second IP header is different from that in the first IP header. In other words, the SFF modifies a field used to check an IP header in a received packet.

Specifically, content of the field used to check the IP header in the second IP header is calculated based on the second IP header.

Content of the field used to check the IP header in the first IP header is calculated based on the first IP header.

For example, when the IP header is an IPv4 header, the field used to check the IP header in the IP header is a header checksum (header checksum) field.

Alternatively, content of the field used to check the IP header in the second IP header is the same as that in the first IP header.

### (d) Field indicating a packet lifetime

Optionally, content of the field indicating the packet lifetime in the second IP header is different from that in the first IP header. In other words, the SFF modifies a field indicating a packet lifetime in a received packet. Alternatively, content of the field indicating the packet lifetime in the second IP header is the same as that in the first IP header. Whether the SFF modifies the field indicating the packet lifetime in the received packet is optionally determined based on a forwarding policy of the SFF.

For example, when the IP header is an IPv4 header, the field indicating the packet lifetime in the IP header is a time to live (time to live, TTL) field. When the IP header is an IPv6 header, the field indicating the packet lifetime in the IP header is a hop limit (hop limit) field.

The foregoing lists, by using (a) to (d), some fields in the IP header that may be modified when the SFF forwards a packet to the SF. For a specific manner of modifying the field by the SFF, refer to descriptions in the following instance 1. Optionally, the SFF modifies at least one of (a) to (d) in the IP header, and keeps content of each field in the IP header except (a) to (d) unchanged. Alternatively, the SFF keeps content of each field in the IP header unchanged.

Step S204: The SF receives the second packet from the SFF.

Step S205: The SF performs service processing based on the second packet.

Specifically, the SF performs service processing based on the second IP header and the first IP payload in the second packet, and ignores the first SR header in the second packet.

Optionally, the SF further returns a packet obtained through service processing to the SFF, and the SFF further restores an encapsulation format of the packet returned by the SF to a format of an SR packet, and then continues to forward the packet. Specifically, the method shown in FIG. 7 optionally further includes the following step S206 to step S209.

Step S206: The SF sends a third packet obtained through the service processing to the SFF.

In some embodiments, when returning a packet, the SFF keeps an encapsulation format of the packet unchanged. Specifically, the SR header in the third packet and the SR header in the second packet are carried in a same location. The SR header in the third packet is encapsulated in the inner layer of the IP header. For example, the third packet includes a third IP header, a second IP payload, and the first segment routing header, and the third IP header is encapsulated in an outer layer of the second IP payload and the first segment routing header.

There are a plurality of possible cases for a specific format of the third packet. The following describes the third packet by using an example with reference to four cases of case 1 to case 4.

Case 1: In the third packet, the SR header is an SRv6 header, and an inner packet is an IPv4 packet.

Specifically, the first segment routing header is the SRv6 header, the third IP header is an IPv4 header, and the second IP payload is an IPv4 payload.

Case 2: In the third packet, the SR header is an SRv6 header, and an inner packet is an IPv6 packet.

Specifically, the first segment routing header is the SRv6 header, the third IP header is an IPv6 header, and the second IP payload is an IPv6 payload.

Case 3: In the third packet, the SR header is an SR-MPLS header, and an inner packet is an IPv4 packet.

Specifically, the first segment routing header is the SR-MPLS header, the third IP header is an IPv4 header, and the second IP payload is an IPv4 payload.

Case 4: In the third packet, the SR header is an SR-MPLS header, and an inner packet is an IPv6 packet.

Specifically, the first segment routing header is the SR-MPLS header, the third IP header is an IPv6 header, and the second IP payload is an IPv6 payload.

Optionally, in a process in which the packet is returned from the SF to the SFF, the SF modifies content of the IP header. In other words, content of one or more fields in the third IP header is different from that in the second IP header. Alternatively, in a process in which the packet is returned from the SF to the SFF, the SF does not modify content of the IP header. In other words, content of each field in the third IP header is the same as that in the second IP header.

Optionally, in a process in which the packet is returned from the SF to the SFF, the SF modifies content of the IP payload. In other words, content of one or more fields in the second IP payload is different from that in the first IP payload. Alternatively, in a process in which the packet is returned from the SF to the SFF, the SF does not modify content of the IP payload. In other words, content of each field in the second IP header is the same as that in the first IP header.

Whether the SF modifies the content of the IP payload or the IP header, and content of which fields in the IP payload or the IP header are specifically modified by the SF are determined, for example, based on a service that the SF is responsible for. For example, the service that the SF is responsible for is specifically destination address translation (destination network address translation, DNAT). After the SF receives the packet sent by the SFF, the SF replaces a destination address in the IP header, and replaces a destination port number in a TCP header or a UDP header in the IP payload. In this way, content of a destination address field in the IP header and content of a destination port number field in the IP payload are changed. Content of a destination address field in the third IP header is an address obtained through replacement by the SF, and content of the destination port number field in the second IP payload is a port number obtained through replacement by the SF. For another example, the service that the SF is responsible for is traffic filtering. After receiving the packet sent by the SFF, the SF matches a quintuple in the packet with a preset filter criteria. If the quintuple matches the filter criteria, the SF allows the packet to pass through and returns a packet to the SFF without modifying content of the IP payload and content the IP header.

Step S207: The SFF receives the third packet from the SF.

Step S208: The SFF obtains a fourth packet based on the third packet.

Step S209: The SFF sends the fourth packet based on the first segment routing header.

A location at which an SR header is carried in the fourth packet is different from a location at which an SR header is carried in the third packet, and is the same as a location at which an SR header is carried in the first packet. The SR header in the fourth packet is encapsulated in the outer layer of the IP header. It can be learned that, the SFF restores an encapsulation format of the packet (the third packet) returned by the SFF to an encapsulation format of the originally received SR packet (the first packet). Specifically, the fourth packet includes the first segment routing header, a fourth IP header, and a third IP payload. The first segment routing header is encapsulated in an outer layer of the fourth IP header and the third IP payload.

A receiving end of the fourth packet includes a plurality of cases. Optionally, the SFF sends the fourth packet to a next SFF in the service function chain. For example, with reference to FIG. 6, the SFF is the SFF 111 in FIG. 6, and the SFF 111 sends the fourth packet to the SF 112. Alternatively, the SFF sends the fourth packet to an egress node in the service function chain. For example, with reference to FIG. 6, the SFF is the SF 112 in FIG. 6, and the SF 112 sends the fourth packet to the egress node 131.

There are a plurality of possible cases for a specific format of the fourth packet. The following describes the fourth packet by using an example with reference to four cases of case 1 to case 4. When the first packet belongs to the case 1 in step S201, the second packet belongs to a case 1 in step S209. When the first packet belongs to the case 2 in step S201, the second packet belongs to a case 2 in step S209. When the first packet belongs to the case 3 in step S201, the second packet belongs to a case 3 in step S209. When the first packet belongs to the case 4 in step S201, the second packet belongs to a case 4 in step S209.

Case 1: In the fourth packet, the SR header is an SRv6 header, and an inner packet is an IPv4 packet.

Specifically, the first segment routing header is the SRv6 header, the fourth IP header is an IPv4 header, and the third IP payload is an IPv4 payload.

Case 2: In the fourth packet, the SR header is an SRv6 header, and an inner packet is an IPv6 packet.

Specifically, the first segment routing header is the SRv6 header, the fourth IP header is an IPv6 header, and the third IP payload is an IPv6 payload.

Case 3: In the fourth packet, the SR header is an SR-MPLS header, and an inner packet is an IPv4 packet.

Specifically, the first segment routing header is the SR-MPLS header, the fourth IP header is an IPv4 header, and the third IP payload is an IPv4 payload.

Case 4: In the fourth packet, the SR header is an SR-MPLS header, and an inner packet is an IPv6 packet.

Specifically, the first segment routing header is the SR-MPLS header, the fourth IP header is an IPv6 header, and the third IP payload is an IPv6 payload.

The foregoing describes, by using step S206 to step S209, how to restore the SR encapsulation format of the packet returned by the SF when the SF returns the packet. In some other embodiments, the SF does not perform the step of returning the packet. For example, the SF is a firewall. If the SF detects that the packet sent by the SFF has a security threat, the SF intercepts the packet and does not return a packet to the SFF, to block transmission of attack traffic.

According to the method provided in this embodiment, when receiving a packet in an SR encapsulation format, the SFF modifies the encapsulation format of the packet, encapsulates an IP header in the packet in an outer layer of an SR header, and sends a modified packet to the SF. In a process in which the packet is forwarded from the SFF to the SF, the packet still carries the SR header. Therefore, when the packet is subsequently returned from the SF to the SFF, the SFF can restore an original SR encapsulation format by using the SR header carried in the packet. In this way, a limitation that a buffer space used to store an SRH needs to be generated and maintained before an SR encapsulation format can be restored is eliminated, huge resource overheads caused by generating and maintaining the buffer space used to store the SRH are avoided, and resource overheads are reduced.

Optionally, the method shown in FIG. 7 is specifically implemented by using a newly defined SID type.

Specifically, this embodiment provides a new SID type and associates the SID type with a behavior of moving the SR header behind the payload. When receiving an SR packet, if the SFF detects that a SID in an SR header of the SR packet matches the SID type, the SFF moves the SR header behind the payload to change the encapsulation format of the SR packet.

For example, the first segment routing header includes a first SID, the SFF stores a first correspondence, and that the SFF obtains a second packet based on the first packet includes: The SFF obtains a SID type based on the first SID and the first correspondence, and performs first processing on the first packet based on the SID type to obtain the second packet.

The first SID is an SR SID. The first SID is, for example, an SRv6 SID or an MPLS label. A process in which the SFF obtains the first SID from the first packet includes: The SFF determines an active SID from the first segment routing header to obtain the first SID.

The active SID refers to a SID that needs to be processed currently in a SID list in a segment routing header. For example, for SRv6, the active SID is a SID in a destination address field in an IPv6 basic header. For another example, for SR-MPLS, the active SID is a topmost label of a label stack in an SR-MPLS header.

For example, a process of obtaining the first SID from the first segment routing header includes: When the first segment routing header is an SRv6 header, the SFF obtains the first SID from the destination address field in the IPv6 basic header in the first segment routing header. When the first segment routing header is an SR-MPLS header, the SFF obtains the first SID from the topmost label field of the label stack in the first segment routing header.

The first correspondence includes the first SID and the SID type. Optionally, the first correspondence is an entry in a local SID table of the SFF. For example, Table 1 is an example of a SID table. The first correspondence is, for example, an entry in which 10: 1:: 1:0 is located in the SID table. The first SID is, for example, 10:1::1:0, and the SID type corresponding to the first SID is, for example, End.P4.

**Table 1**

| SID table | | | |
|---|---|---|---|
| SID | SID Type | Inbound interface | Outbound interface |
| 10:1::1:0 | End.P4 | Ethernet 1/0/0.2 | Ethernet 1/0/0.1 |
| 20:1::1:0 | End.X | Ethernet 1/0/0.3 | Ethernet 1/0/0.4 |

Optionally, the SFF specifically obtains the SID type in a table lookup manner. For example, the SFF queries the SID table based on the first SID; and in response to that the first SID matches the SID type corresponding to the first SID in the SID table, the SFF performs first processing on the first packet based on the SID type corresponding to the first SID, to obtain the second packet.

The SID type corresponding to the first SID indicates that the segment routing header is not supported. The type corresponding to the first SID is, for example, an SR proxy SID.

The first processing refers to processing performed by the SFF on a packet when the packet is forwarded from the SFF to the SF. The first processing includes: setting the first segment routing header behind the first IP payload, and replacing the first IP header with the second IP header.

Optionally, the first correspondence further includes at least one of an outbound interface bound to the first SID or an inbound interface bound to the first SID. For example, refer to Table 1. The first SID is, for example, 10:1::1:0, the inbound interface bound to the first SID is the interface Ethernet 1/0/0.2, and the outbound interface bound to the first SID is the interface Ethernet 1/0/0.1.

The outbound interface bound to the first SID is configured to send a packet obtained through the first processing to the SF. For example, when performing step S203, the SFF sends the second packet to the SF through the outbound interface bound to the first SID.

The inbound interface bound to the first SID is configured to receive the packet that is returned by the SF and that is obtained through the service processing. For example, when performing step S207, the SFF receives the third packet from the SF through the inbound interface bound to the first SID.

According to the foregoing manner, a packet processing behavior of the SFF is compatible with an SR protocol, implementation complexity is low, and configuration is simple.

Optionally, when receiving the packet returned by the SF, the SFF restores the SR packet encapsulation format based on an indication of some information related to the packet. There are a plurality of implementations of specifically instructing the SFF to restore the encapsulation format of the SR packet. The following provides descriptions by using an example with reference to Implementation (1) to Implementation (3).

Implementation (1): based on the IP header in a packet returned by the SF.

For example, the IP header in the packet returned by the SF is the third IP header. The SFF performs second processing on the third packet based on the third IP header, to obtain the fourth packet. In a possible implementation, the SFF determines whether the third IP header includes identification information, and if the third IP header includes the identification information, the SFF performs the second processing on the third packet to obtain the fourth packet.

The second processing refers to a manner in which the SFF processes the packet returned by the SF. The second processing is used to restore the SR packet encapsulation format. The second processing includes: replacing the third IP header with the fourth IP header, and encapsulating the first segment routing header in the outer layer of the fourth IP header and the third IP payload.

The identification information identifies a packet encapsulation format provided in this embodiment. In other words, the identification information identifies that the segment routing header is set behind the IP payload. For example, the identification information included in the third IP header identifies that the first segment routing header is set behind the second IP payload.

Optionally, identification information in the IP header of the packet returned by the SF is previously added by the SFF to the packet. Specifically, when the SFF forwards a packet to the SF, the SFF adds identification information to the packet, to identify that the packet has an encapsulation format in which the segment routing header is set behind the IP payload. The SFF sends the packet including the identification information to the SF, and the SF receives the packet including the identification information. In a process in which the SF performs service processing, the SF keeps the identification information in the packet unchanged. After performing service processing, the SF returns, to the SFF, a packet including the identification information, so that the packet received by the SFF includes the identification information. For example, an IP header in the packet sent by the SFF is the second IP header. The second IP header also includes identification information, and the identification information in the second IP header identifies that the first segment routing header is set behind the first IP payload.

According to the foregoing manner, because the SFF adds the identification information during upstream processing, the SFF determines, based on whether a returned packet carries the identification information, whether to perform processing of encapsulating an SR packet format.

A location at which the identification information is carried in a packet includes a plurality of implementations. In a possible implementation, the identification information is carried in an option in the IP header. For example, the third IP header and the second IP header both include a first option, and the first option carries the identification information.

The option that carries the identification information includes but is not limited to an option in an IPv4 header and an option in an IPv6 extension header. The following describes some options used to carry the identification information by using examples. Refer to the following manner (1-1) to manner (1-3).

Manner (1-1): When an inner packet is an IPv4 packet, the identification information is carried in an option in an IPv4 header.

For example, both the third IP header and the second IP header are IPv4 headers, and both a first option in the third IP header and a first option in the second IP header are IPv4 options in the IPv4 header.

Manner (1-2): When an inner packet is an IPv6 packet, the identification information is carried in an option in an IPv6 extension header, for example, a hop-by-hop options header.

For example, both the third IP header and the second IP header are IPv6 headers including a hop-by-hop options header, and both a first option in the third IP header and a first option in the second IP header are options in the hop-by-hop options header.

Manner (1-3): When an inner packet is an IPv6 packet, the identification information is carried in an option in an IPv6 extension header, for example, a destination options header.

For example, both the third IP header and the second IP header are IPv6 headers including a destination options header, and both a first option in the third IP header and a first option in the second IP header are options in the destination options header.

A specific location at which the identification information is carried in an option includes a plurality of cases. Optionally, a new type of option is added, and the identification information is carried in a type field of the option. To be specific, an option type is used as information that identifies the packet encapsulation format in which the segment routing header is set behind the IP payload. For example, a type field of the first option carries the identification information. Alternatively, the identification information is carried in a value field (also referred to as an option data field) of an existing option. For example, a value field of the first option carries the identification information.

Implementation (2): based on an inbound interface of a packet returned by the SF.

For example, the SFF performs second processing on the third packet based on an interface for receiving the third packet, to obtain the fourth packet. In a possible implementation, the SFF determines whether the interface for receiving the third packet is the inbound interface bound to the first SID, and if the interface for receiving the third packet by the SFF is the inbound interface bound to the first SID, the SFF performs the second processing on the third packet.

Implementation (3): based on the IP header and an inbound interface in a packet returned by the SF.

Implementation (3) is equivalent to a combination of Implementation (1) and Implementation (2) in an "and" relationship. For example, the SFF performs second processing on the third packet based on an interface for receiving the third packet and the third IP header, to obtain the fourth packet. In a possible implementation, the SFF determines whether the third IP header includes identification information and whether the interface for receiving the third packet is the inbound interface bound to the first SID, and if the third IP header includes the identification information and the interface for receiving the third packet by the SFF is the inbound interface bound to the first SID, the SFF performs the second processing on the third packet.

In some embodiments, in a process in which the SFF sends a packet to the SF, the SFF further adds length information to the IP header, so that the SF determines a boundary of the IP payload based on the length information in the IP header. For example, the packet sent by the SFF to the SF includes the second IP header, the first IP payload, and the first segment routing header. The second IP header further includes second length information, and the second length information indicates a length of the first IP payload, or indicates a sum of lengths of the first IP payload and the second IP header. When performing service processing based on the second packet, the SFF determines an end location of the first IP payload based on the second length information, to ignore the first SR header behind the first IP payload.

In some embodiments, the IP header in a packet returned by the SF to the SFF includes length information, so that the SFF determines a location of the SR header based on the IP header. For example, the packet returned by the SF includes the third IP header, the second IP payload, and the first segment routing header. The third IP header further includes first length information, and the first length information is used to determine a location of the first segment routing header in the third packet. The first length information indicates a length of the second IP payload, or indicates a sum of lengths of the third IP header and the second IP payload.

Optionally, after the SF receives the packet that is sent by the SFF and that includes the length information, the SFF does not modify the length information in the packet. For example, the second length information is the same as the first length information. Alternatively, after the SF receives the packet that is sent by the SFF and that includes the length information, the SFF modifies the length information in the packet. For example, the second length information is different from the first length information.

Whether the SF modifies the length information in the packet is determined, for example, based on a service that the SF is responsible for. For example, when the service of the SF relates to adding some content to or deleting some content from the IP payload of a packet, a length of the IP payload in the packet returned by the SF changes compared with the packet sent by the SFF to the SF. In this way, the SF may indicate the length of the changed IP payload by modifying the length information in the packet sent by the SFF.

Specifically, when the SF adds content to the IP payload, the IP payload becomes longer. The SF modifies, based on a length of the added content, the length information in the packet sent by the SFF. The length information modified by the SF includes the length of the content added by the SF. For example, compared with the first length information, a length indicated by the second length information not only includes a length indicated by the first length information (for example, an original length of the IP payload), but also includes the length of the content added by the SF. The length indicated by the second length information is equivalent to a sum of the length indicated by the first length information and the length of the content added by the SF.

When the SF deletes content from the packet, the IP payload becomes shorter. The SF modifies, based on a length of the deleted content, the length information in the packet sent by the SFF. The length information modified by the SF no longer includes the length of the content deleted by the SF. For example, compared with the first length information, a length indicated by the second length information does not include the length of the content deleted by the SF. The length indicated by the second length information is equivalent to a difference between the length indicated by the first length information and the length of the content deleted by the SF.

For a more specific example, the service of the SF is HTTP header enrichment. The SF adds user information and device identification information to an HTTP header of the packet sent by the SFF, so that an IP payload part in the packet becomes longer. In this way, the SF modifies the length information in the packet, so that the modified length information includes the added user information and device identification information.

A location at which the length information is carried in a packet includes a plurality of implementations. In a possible implementation, the length information is carried in an option in the IP header. For example, the third IP header and the second IP header both include a first option, and the first option carries the length information. The option that carries the length information includes but is not limited to an option in an IPv4 header and an option in an IPv6 extension header. For details, refer to the descriptions of manner (1-1) to manner (1-3).

Optionally, the length information and the identification information are carried in a same option in the IP header. For example, the third IP header and the second IP header both include a first option, and the first option carries the identification information and the length information. For example, a type field of the first option carries the identification information, and a value field following the type field carries the length information.

Optionally, in a process in which the SFF performs step S202 in the method shown in FIG. 7, the SFF further encapsulates a packet header in the outer layer of the IP header in the packet, so that the packet is forwarded from the SFF to the SF by using an outer packet header of the IP header.

Whether the SFF encapsulates a packet header in the outer layer of the IP header and which type of packet header specifically is encapsulated depend on a network connection mode between the SFF and the SF. The following provides descriptions by using an example with reference to three network connection modes between the SFF and the SF.

Connection mode 1: The SFF and the SF are connected through a layer 2 network.

In the connection mode 1, when sending a packet to the SF, the SFF further encapsulates an Ethernet header in the outer layer of the IP header in the packet. The packet sent by the SFF is equivalent to an Ethernet frame. An encapsulation format of the packet sent by the SFF is: Ethernet header + IP header + IP payload + SR header. Specifically, when an inner packet is an IPv4 packet, the encapsulation format of the packet sent by the SFF is: Ethernet header + IPv4 header (optionally including an IPv4 option) + IP payload + SR header. When an inner packet is an IPv6 packet, the encapsulation format of the packet sent by the SFF is: Ethernet header + IPv6 basic header + optional IPv6 extension header (optionally including an IPv6 option) + IP payload + SR header.

The Ethernet header includes one or two VLAN tags (VLAN tags), such as dot1q (802.1q) or QinQ (namely, 802.1Q-in-802.1Q, also referred to as Stacked VLAN or Double VLAN, characterized by including two 802.1Q tags: one public network tag and one private network tag).

The second packet is used as an example. Optionally, the second packet further includes a first Ethernet header, and the first Ethernet header is encapsulated in an outer layer of the second IP header. For example, refer to FIG. 6. In a packet (namely, the second packet) sent by the SFF 111 to the SF 112, optionally, an Ethernet header (namely, the first Ethernet header) is further encapsulated in the outer layer of the IP header (namely, the second IP header), so that the IP header, the IP payload, and the segment routing header are forwarded to the SF 112 through the layer 2 network.

Connection mode 2: The SFF and the SF are connected through a layer 3 network.

Specifically, an IP interface on the SFF is connected to an IP interface on the SF. Optionally, one or more L3 devices (such as a router or a layer 3 switch) exist between the SFF and the SF.

In the connection mode 2, an outermost packet header in a packet sent by the SFF to the SF may be optionally an IP header.

Connection mode 3: The SFF and the SF are connected through an explicit tunnel (tunnel).

In the connection mode 3, when sending a packet to the SF, the SFF further encapsulates a tunnel header in the outer layer of the IP header in the packet. An encapsulation format of the packet sent by the SFF is: tunnel header + IP header + IP payload + SR header. For example, when an inner packet is an IPv4 packet, the encapsulation format of the packet sent by the SFF is: tunnel header + IPv4 header (optionally including an IPv4 option) + IP payload + SR header. When an inner packet is an IPv6 packet, the encapsulation format of the packet sent by the SFF is: tunnel header + IPv6 basic header + optional IPv6 extension header (optionally including an IPv6 option) + IP payload + SR header.

A specific type of the tunnel header is determined, for example, based on a type of a tunnel between the SFF and the SF. The tunnel header includes but is not limited to a VXLAN header, a GRE header, a VXLAN-GPE header, a GENEVE header, and the like.

The second packet is used as an example. Optionally, the second packet further includes a first tunnel header, and the first tunnel header is encapsulated in the outer layer of a second IP header. For example, refer to FIG. 6. In a packet (namely, the second packet) sent by the SFF 111 to the SF 112, optionally, a tunnel header (namely, the first tunnel header) is further encapsulated in the outer layer of the IP header (namely, the second IP header), so that the IP header, the IP payload, and the segment routing header are forwarded to the SF 112 through the tunnel.

With reference to the three connection modes, the foregoing describes a packet header that may exist in the outer layer of the IP header in the packet from the SFF to the SF. When a packet header exists in the outer layer of the IP header, and when the SF performs step S205 in the method shown in FIG. 7, the SF optionally first terminates the packet header (for example, an Ethernet header or a tunnel header) in the outer layer of the IP header in the second packet, and then performs service processing.

Optionally, in a process in which the SF performs step S205 and step S206 in the method shown in FIG. 7, the SF further encapsulates a packet header in the outer layer of the IP header in the packet, so that the packet is returned from the SF to the SFF by using an outer packet header of the IP header.

Usually, an action that the SF encapsulates the packet header in the outer layer of the IP header in the procedure of returning the packet from the SF to the SFF is symmetric to an action that the SFF encapsulates the packet header in the outer layer of the IP header in the procedure of forwarding the packet from the SFF to the SF. For example, when forwarding a packet, the SFF first encapsulates a tunnel header and then forwards a packet that includes the tunnel header to the SF. In this way, when returning a packet, the SF first encapsulates a tunnel header and then forwards a packet that includes the tunnel header to the SFF. The following still describes the packet header encapsulated in the outer layer of the IP header by the SF by using an example with reference to the three network connection modes between the SF and the SFF.

Connection mode 1: The SF and the SFF are connected through a layer 2 network.

In the connection mode 1, when sending a packet to the SFF, the SF further encapsulates an Ethernet header in the outer layer of the IP header in the packet. The packet sent by the SF is equivalent to an Ethernet frame. An encapsulation format of the packet sent by the SF is: Ethernet header + IP header + IP payload + SR header. Specifically, when an inner packet is an IPv4 packet, the encapsulation format of the packet sent by the SF is: Ethernet header + IPv4 header (optionally including an IPv4 option) + IP payload + SR header. When an inner packet is an IPv6 packet, the encapsulation format of the packet sent by the SF is: Ethernet header + IPv6 basic header + optional IPv6 extension header (optionally including an IPv6 option) + IP payload + SR header.

The Ethernet header includes one or two VLAN tags (for example, dot1q or QinQ).

The third packet is used as an example. Optionally, the third packet further includes a second Ethernet header, and the second Ethernet header is encapsulated in the outer layer of the third IP header.

Connection mode 2: The SF and the SFF are connected through a layer 3 network.

Specifically, an IP interface on the SF is connected to an IP interface on the SFF. Optionally, one or more L3 devices (such as a router or a layer 3 switch) exist between the SF and the SFF.

In the connection mode 2, an outermost packet header in a packet sent by the SF to the SFF may be optionally an IP header.

Connection mode 3: The SF and the SFF are connected through an explicit tunnel (tunnel).

In the connection mode 3, when sending a packet to the SFF, the SF further encapsulates a tunnel header in the outer layer of the IP header in the packet. An encapsulation format of the packet sent by the SF is: tunnel header + IP header + IP payload + SR header. For example, when an inner packet is an IPv4 packet, the encapsulation format of the packet sent by the SF is: tunnel header + IPv4 header (optionally including an IPv4 option) + IP payload + SR header. When an inner packet is an IPv6 packet, the encapsulation format of the packet sent by the SF is: tunnel header + IPv6 basic header + optional IPv6 extension header (optionally including an IPv6 option) + IP payload + SR header.

A specific type of the tunnel header is determined, for example, based on a type of a tunnel between the SF and the SFF. The tunnel header includes but is not limited to a VXLAN header, a GRE header, a VXLAN-GPE header, a GENEVE header, and the like.

The third packet is used as an example. Optionally, the third packet further includes a second tunnel header, and the second tunnel header is encapsulated in the outer layer of the third IP header.

Optionally, in the packet header encapsulated by the SFF in the IP header and the packet header encapsulated by the SF in the IP header, content of some fields is the same but content of some fields is different. The connection mode 3 is used as an example. In the tunnel header encapsulated by the SFF in the outer layer of the IP header and the tunnel header encapsulated by the SF in the outer layer of the IP header, source address fields and destination address fields have different content, but common fields of a tunnel header such as a protocol type and a protocol version number have same content. Specifically, in the tunnel header encapsulated by the SFF in the outer layer of the IP header, the source address is the IP address of the SFF, and the destination address is the IP address of the SF. In the tunnel header encapsulated by the SF in the outer layer of the IP header, the source address is the IP address of the SF and the destination address is the IP address of the SFF.

With reference to the three connection modes, the foregoing describes a packet header that may exist in the outer layer of the IP header in the packet from the SF to the SFF. When a packet header exists in the outer layer of the IP header, and when the SFF performs step S208 in the method shown in FIG. 7, the SFF optionally first terminates a packet header (for example, an Ethernet header or a tunnel header) encapsulated in the outer layer of the IP header in the third packet, and then obtains the fourth packet based on a remaining part of the third packet. When the SFF performs step S209, the fourth packet sent by the SFF usually does not include the packet header (for example, an Ethernet header or a tunnel header) encapsulated by the SF in the outer layer of the IP header.

The following describes the method shown in FIG. 7 by using an example with reference to four instances. A value-added service (value-added service, VAS) device in the following four instances is the SF in the method shown in FIG. 7. A router in the following four instances is the SFF in the method shown in FIG. 7. The VAS is a more common term for the SF. The VAS is a device such as FW, DPI, and NAT. The NAT includes source network address translation (source network address translation, SNAT) and DNAT.

An instance 1 describes a processing procedure in which an SFF accesses an IPv4 VAS in an SRv6 SFC proxy scenario, an instance 2 describes a processing procedure in which an SFF accesses an IPv6 VAS in an SRv6 SFC proxy scenario, an instance 3 describes a processing procedure in which an SFF accesses an IPv4 VAS in an SR-MPLS SFC proxy scenario, and an instance 4 describes a processing procedure in which an SFF accesses an IPv6 VAS in an SR-MPLS SFC proxy scenario. For brevity of description, the instance 2, the instance 3, and the instance 4 focus on a difference from the instance 1. For a same or similar part of the instance 2, the instance 3, and the instance 4 as the instance 1, refer to the instance 1.

### Instance 1

The instance 1 provides a method for implementing an SRv6 IPv4 service function chain. In the instance 1, a VAS (namely, SF) supports an IPv4 instead of an IPv6 or an SRv6. In a packet received by the router in the instance 1, an outer layer includes an SRv6 header and an inner layer includes an IPv4 packet. End.P4 in the instance 1 is the type corresponding to the first SID in the method shown in FIG. 7. The SRv6 header in the instance 1 is the SR header in the method shown in FIG. 7. The IPv4 header in the instance 1 is the IP header in the method shown in FIG. 7. The IPv4 payload in the instance 1 is the IP payload in the method shown in FIG. 7. The IPv4 option in the instance 1 is the first option in the method shown in FIG. 7.

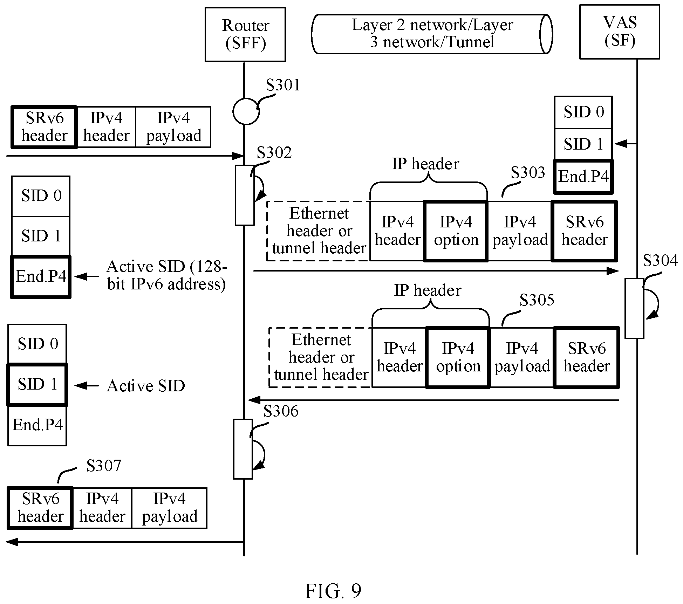

FIG. 9 shows a flowchart of the instance 1. The instance 1 includes step S301 to step S307.

Step S301: Statically configure an End.P4 SID on a router (namely, an SFF having a proxy function). End.P4 is a new SRv6 SFC SID type defined in this instance. The End.P4 is used to support editing to an IPv4 encapsulation and restoring to an SRv6 encapsulation. P4 indicates a proxy for an IPv4 VAS (proxy for IPv4 VAS).

The following is an example of configuring the End.P4 SID. The following configuration example includes three command lines, which can be used to configure one End.P4 SID. A length of the End.P4 SID is 128 bits. The End.P4 SID includes a 64-bit locator and a 64-bit operation code (operation code, opcode) (namely, a function). The locator is A::1. The opcode is ::1.

```
             [Router] segment-routing ipv6
                [Router-segment-routing-ipv6] locator test ipv6-prefix A::1 64 static 32
                [Router-segment-routing-ipv6-locator] opcode
 ::1 end.p4 out-interface Ethernet 1/0/0.1 in-
                interface Ethernet 1/0/0.2
```

The following explains a specific meaning of the configuration.

The first command line, also referred to as a segment-routing ipv6 command, indicates to enable SRv6 and enter a segment-routing ipv6 view.

The second command line is also referred to as a locator command, indicating that a name of the locator is test, a prefix of an IPv6 address is A::1, a length of the prefix of the IPv6 address is 64 bits, and a length of a statically configured SID in the locator is 32 bits. Indicated by the second command line, the router generates a 64-bit network segment route based on A::1 (where a destination prefix in the route is A::/64) and advertises the network segment route by using a routing protocol. After learning the network segment route, and when receiving a packet whose destination address belongs to a network segment A::/64, another device matches, based on the destination address, a route advertised by the router, and then forwards the packet to the router.

The third command line is also referred to as an opcode command, which is used to configure an opcode for a static SID. The opcode and an ipv6-prefix configured by the locator command constitute the static SID. A value range of the opcode configured by the opcode command is determined by a static parameter in the locator command. To be specific, a maximum value of the opcode is determined by a bit length specified by the static parameter. The SID type is end.p4, an outbound interface (out-interface) bound to the end.p4 SID type is Ethernet 1/0/0.1, and an inbound interface (in-interface) bound to the end.p4 SID type is Ethernet 1/0/0.2.

Optionally, the End.P4 SID is configured and orchestrated based on per-VRF per-SF (per-VRF per-SF) to support virtual routing and forwarding (virtual routing and forwarding, VRF). In other words, one SID corresponds to one VAS and one SID corresponds to one VRF instance.

Step S302: When receiving an SRv6 packet whose active SID is End.P4, the router performs processing processes provided in the following step S302-1 to step S302-5. Step S302 is an upstream processing procedure of End.P4. For example, a process in which the router detects that the active SID is End.P4 is as follows: The router matches a destination address in an outer IPv6 basic header of the SRv6 packet with a local SID table (local SID table), and determines that the destination address matches an entry in the local SID table. A SID type in the entry is End.P4.

Step S302-1: The router checks whether an inner packet in the SRv6 packet is an IPv4 packet. If the inner packet is not the IPv4 packet, the router discards the SRv6 packet.

Step S302-2: The router checks whether option space of the IPv4 header has at least 4-byte remaining space. If the option space has remaining space less than 4 bytes, the router discards the SRv6 packet.

Step S302-3: The router checks whether End.P4 is the last SID (where the last SID refers to a SID list [0]). If End.P4 is the last SID, the router discards the SRv6 packet.

Step S302-4: The router performs SRH.SL--, and updates IPv6 DA=SID list[SRH.SL]. SRH.SL-- refers to decreasing a value of an SL field in the SRH by one. Updating IPv6 DA=SID list [SRH.SL] refers to updating the destination address in the IPv6 basic header to SID list [SRH.SL]. SID list [SRH.SL] refers to a SID to which the SL field in the SRH points in the SID list (SID list).

For example, refer to FIG. 9. The SL field in the SRv6 header in the packet received by the router points to End.P4 SID in the SID list. After the router decreases the value of the SL field by one, the SL field in the SRv6 header of a packet sent out by the router points to a next SID (namely, a SID 1) of the End.P4 SID in the SID list.

Step S302-5: The router edits the SRv6 packet: SRv6 header + IPv4 header + IPv4 payload IPv4 header → IPv4 header + IPv4 option + IPv4 payload + SRv6 header. In other words, the SRv6 header is moved behind the IPv4 payload, and then the IPv4 option is inserted between the IPv4 header and the IPv4 payload. For a specific format of the IPv4 option, see the following section.

Based on step S302-5, the router changes the encapsulation format of the packet, and converts the encapsulation format of the packet from the SRv6 encapsulation format to the IPv4 encapsulation format.

Step S303: The router sends, based on a configuration parameter of End.P4, an edited IPv4 packet to the VAS through the outbound interface bound to End.P4.

Step S304: When the VAS receives the IPv4 packet sent by the router, the VAS identifies, based on the IPv4 option, a specific packet format provided in this embodiment (where the SRv6 header is behind the IPv4 payload). Then, the VAS determines the boundary of the IPv4 payload based on the payload length field in the IPv4 option. Therefore, the VAS can ignore an SRv6 header part and process a remaining part.

Step S305: After completing service processing, the VAS maintains a format of the processed packet as a format of an IPv4 packet, and returns the processed packet to the router.

Step S306: When receiving the IPv4 packet returned by the VAS from a specified inbound interface, if it is detected that the IPv4 packet has an IPv4 option and the IPv4 option is an option defined in this embodiment, the router performs a processing procedure provided in the following step S306-1 to step S306-3. Step S306 is a downstream processing procedure of End.P4.

Step S306-1: The router parses the IPv4 option, determines a location of an SRv6 header based on the payload length in the IPv4 option, and performs SRv6 header validity check. If the SRv6 header is invalid, the router discards the packet; or if the SRv6 header is valid, the router performs the following step S306-2.

In addition, IPv6 DA==SIDList[SRH.SL]. In other words, a destination address in the IPv6 basic header is the SID to which the SL field in the SRH points in the SID table.

Step S306-2: The router strips the IPv4 option from an input IPv4 packet, and restores the encapsulation format in the input IPv4 packet to the format of an SRv6 packet: IPv4 header + IPv4 option + IPv4 payload + SRv6 header→SRv6 header + IPv4 header + IPv4 payload.

The SRv6 header includes two types of packet headers: an IPv6 header and an SRH header. The IPv6 header includes at least one 40-byte IPv6 basic header, and optionally further includes one or more IPv6 extension headers (where the IPv6 extension header in this sentence does not include an IPv6 routing extension header such as an SRH).

Step S307: The router continues to forward based on an active SID in an SRH in a restored SRv6 packet. For example, refer to FIG. 9. The active SID in the SRH in the recovered SRv6 packet is a next SID (namely, a SID 1) of the End.P4 SID. The router continues to forward the restored SRv6 packet based on the SID 1.

Optionally, if the router and the VAS use the connection mode 3, in other words, a tunnel exists between the router and the VAS, the packet exchanged between the router and the VAS further includes a tunnel header encapsulated in an outer layer of the IPv4 header. Specifically, in a process in which the router performs step S302, the router further generates the tunnel header, and adds the tunnel header to the outer layer of the IPv4 header, to obtain an IPv4 packet including the tunnel header. Refer to FIG. 9. In a process in which the router performs step S303, the IPv4 packet sent by the router to the VAS further includes a tunnel header in front of the IPv4 header. In a process in which the VAS performs step S304, the VAS first strips a tunnel header (namely, terminating the tunnel header) from the received IPv4 packet, and then performs service processing based on an IPv4 packet from which the tunnel header is stripped. After receiving the IPv4 packet obtained through the service processing, the VAS re-encapsulates a tunnel header in the IPv4 packet. Refer to FIG. 9. In the process in which the VAS performs step S305, the IPv4 packet sent by the VAS to the router further includes a tunnel header encapsulated in an outer layer of the IPv4 header. In a process in which the router performs step S306, the router first strips the tunnel header from the IPv4 packet returned by the VAS, and then performs the steps of restoring the SRv6 encapsulation and forwarding a packet.

A main function of the tunnel header is to transmit a packet between the router and the VAS. The tunnel header includes but is not limited to a VXLAN header, a GRE header, a VXLAN-GPE header, a GENEVE header, and the like. In the packet sent by the router to the VAS. a source IP address of the tunnel header is an IP address of the router, and a destination IP address is an IP address of the VAS. In the packet returned by the VAS to the router, a source IP address of the tunnel header is the IP address of the VAS, and a destination IP address is the IP address of the router.

If the router and the VAS use a connection mode 1, in other words, the router and the VAS are connected through an L2 interface, a packet exchanged between the router and the VAS further includes an Ethernet header encapsulated in an outer layer of the IPv4 header. An encapsulation procedure and a termination procedure of the Ethernet header are similar to the encapsulation procedure and the termination procedure of the tunnel header. This is not described herein again.

FIG. 8 is a schematic diagram of a format of an IPv4 option according to this embodiment. An IPv4 option shown in FIG. 8 is an example for describing the first option in the method shown in FIG. 7. Specifically, in step S203 in the method shown in FIG. 7, the IP header of the second packet sent by the SFF optionally includes the IPv4 option shown in FIG. 8. In step S206 in the method shown in FIG. 7, the IP header of the third packet sent by the SF optionally includes the IPv4 option shown in FIG. 8.

The IPv4 option shown in FIG. 8 includes an option type (type) field, an option length (length) field, and a payload length (payload length) field.

The option type field is an example for describing the field in which the identification information is located in the method shown in FIG. 7. A length of the option type field is 1 byte. A value of the option type field is standard or privately defined. Before standardization, the value of the option type field is optionally one of experimental values of an IPv4 option type to avoid a conflict. The experimental values of the IPv4 option type include 30, 94, 158, and 222.

A length of the option length field is 1 byte. A value of the option length field is 4.

The payload length field is an example for describing the field in which the length information is located in the method shown in FIG. 7. For example, in step S203 in the method shown in FIG. 7, the IP header of the second packet sent by the SFF optionally includes the payload length field shown in FIG. 8, and a value of the payload length field indicates a length of the first IP payload in the second packet. In step S206 in the method shown in FIG. 7, the IP header of the third packet sent by the SF optionally includes the payload length field shown in FIG. 8, and the value of the payload length field indicates a length of the second IP payload in the third packet. A length of the payload length field is 2 bytes.

In the instance 1, the value of the payload length field is a byte length of an IPv4 payload in the SRv6 packet input by the router.

The newly added IPv4 option exists between the router and the VAS, and is not transmitted to a downstream node of the router. In addition, in most cases (when the VAS does not change the IPv4 payload length), the VAS does not need to parse the option. Therefore, during deployment, the option type may use the experimental value of the IPv4 option type, instead of being standardized.

The following analyzes a requirement of the IPv4 VAS in this embodiment.

The IPv4 VAS needs to be capable of supporting receiving the IPv4 packet defined in this embodiment, keeping content of the newly added IPv4 option and the SRv6 header unchanged, and optionally modifying content of the IPv4 payload. Optionally, the IPv4 packet further includes an IPv4 option other than the IPv4 option defined in this embodiment. Table 2 below describes support statuses of various VASs.

**Table 2**

| VAS Operation | Operation description | VAS requirement | VAS example |
|---|---|---|---|
| Traffic statistics | Only the IPv4 header and an upper-layer header in the IPv4 payload, namely, the quintuple, are parsed, and a boundary of the IPv4 payload is not exceeded. | No new requirement | / |
| Traffic filtering | Traffic is filtered based on the quintuple, only the upper-layer header is parsed, and the boundary of the IPv4 payload is not exceeded. | No new requirement | FW |
| Address translation | A source/destination address and/or TCP/UDP source/destination port number in the IPv4 header are/is replaced, only the upper-layer header (more specifically, a TCP/UDP header) is parsed and operated, and the boundary of the IPv4 payload is not exceeded. | No new requirement | SNAT/DNAT |
| Load balancing | Load balancing of the traffic is performed based on the quintuple. Only the upper layer header is parsed, and the boundary of the IPv4 payload is not exceeded. | No new requirement | LB |
| Web traffic filtering | In-depth detection and parsing are performed on HTTP/HTTPS and application-layer data. Upper-layer header = TCP header + HTTP header, which directly limits a parsing scope and therefore the boundary of the IPv4 payload is not exceeded. | No new requirement | WAF |
| Deep packet inspection | In-depth detection and analysis are performed on L4 to L7 content. The upper-layer header limits the parsing range and the boundary of the IPv4 payload is not exceeded. | No new requirement | DPI |
| HTTP header enrichment | A carrier inserts user information and device identifier information into the HTTP header. The boundary of the IPv4 payload is moved. | Modification needed | HTTP header enrichment |

As shown in the table, even if the IPv4 VAS needs to parse the content of the IPv4 payload, the upper-layer header limits an operation scope within the boundary of the IPv4 payload. Therefore, the new IPv4 option does not need to be aware of. Therefore, most IPv4 VASs can support this embodiment without any modification.

When editing and generating the IPv4 packet (step S302), the router updates the content of the IPv4 header. For details, refer to the following step S302-a to step S302-c. Step S302-a to step S302-c are optionally performed sequentially or simultaneously. A time sequence of step S302-a to step S302-c is not limited in this embodiment.

Step S302-a: The router updates an IP header length (IHL) in the IPv4 header. An updated IHL includes a length of the newly added IPv4 option. For example, the updated IHL is optionally a sum of lengths of the received IPv4 header and the newly added IPv4 option. For example, if a length of an IPv4 header in an SRv6 packet received by the router is N and the router adds an IPv4 option with a length of M, the router updates content of an IHL field from N to (N+M).

Step S302-b: The router updates a total length (total length) in the IPv4 header. An updated total length of the IPv4 header includes the length of the SRv6 header and the length of the newly added IPv4 option. For example, the updated IHL is optionally a sum of lengths of the received IPv4 header, the newly added IPv4 option, the IPv4 payload, and the SRv6 header. For example, in the SRv6 packet received by the router, a length of the IPv4 header is N, a length of the IPv4 payload is P, and a length of the SRv6 header is Q, and the router adds an IPv4 option with a length of M. In this case, the router updates the content of the IHL field from (N+P) to (N+P+M+Q).

Step S302-c: The router updates header checksum (header checksum) of the IPv4 header. Specifically, when completing editing the IPv4 packet, the router recalculates the header checksum based on an edited IPv4 packet, and updates the header checksum in the IPv4 header to recalculated header checksum.

Optionally, in a process in which the router forwards the IPv4 packet to the VAS, the router further reduces time to live (TTL) in the IPv4 header by one, or keeps the TTL in the IPv4 header unchanged. Whether the router updates the TTL is optionally determined based on a forwarding policy.

The IPv4 header received by the router may include the IPv4 option. If the received IPv4 header already includes the IPv4 option, the IPv4 option in the received IPv4 header needs to have an available space of at least 4 bytes, to ensure that a total length of the IPv4 option does not exceed 40 bytes specified in the standard after the newly added IPv4 option in this embodiment is added.

When returning the IPv4 packet to the router (S304 and S305), the VAS executes a normal IPv4 forwarding process, and reduces the TTL in the IPv4 header by one. Optionally, the VAS modifies the content of the IPv4 payload, or keeps the content of the IPv4 payload unchanged. Whether the VAS modifies the content of the IPv4 payload is optionally determined based on a service function of the VAS. In some embodiments, the VAS is prohibited from parsing or modifying content of the SRv6 header part.

In the process in which the router performs S306, after receiving the IPv4 packet returned by the VAS and restoring the SRv6 packet format, the router updates the content of the IPv4 header. For details, refer to the following step S306-a to step S306-d. Step S306-a to step S306-d are optionally performed sequentially or simultaneously. A time sequence of step S306-a to step S306-d is not limited in this embodiment.

Step S306-a: The router removes, from the IPv4 packet returned by the VAS, the IPv4 option inserted by the router when step S302 is performed.

Step S306-b: The router updates the IHL in the IPv4 header. An updated IHL does not include a length of the previously inserted IPv4 option. For example, a length indicated by an IHL field in the IPv4 header received by the router from the VAS is (N+M), and the IPv4 header includes the IPv4 option whose length is M and that is previously added by the router. After the router removes the IPv4 option whose length is M, the router updates a length indicated by the IHL field from (N+M) to N.

Step S306-c: The router updates the total length (total length) in the IPv4 header. An updated total length of the IPv4 header does not include the length of the SRv6 header or the length of the previously inserted IPv4 option.

For example, a length indicated by a total length field in the IPv4 header received by the router from the VAS is (N+P+M+Q). The router removes the IPv4 option whose length is M, moves the SRv6 header whose length is Q to the front of the IPv4 header, and then updates the length indicated by the total length field from (N+P+M+Q) to (N+P).

Step S306-d: The router updates the header check (header checksum) of the IPv4 header.

### Instance 2

The instance 2 provides a method for implementing an SRv6 IPv6 service function chain. In the instance 2, the VAS supports an IPv6 instead of an SRv6. In a packet received by the router in the instance 2, an outer layer includes an SRv6 header and an inner layer includes an IPv6 packet.

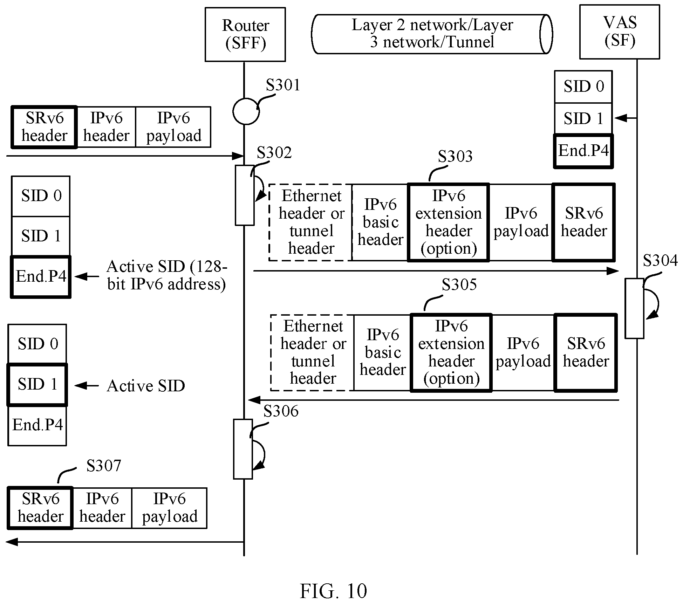

FIG. 10 shows a flowchart of the instance 2. A specific procedure of the instance 2 is equivalent to replacing the IPv4 header in the instance 1 with an IPv6 header, replacing the IPv4 payload with an IPv6 payload, and replacing the IPv4 option with an IPv6 option.

### Instance 3

The instance 3 provides a method for implementing an SR-MPLS IPv4 service function chain. In the instance 3, the VAS supports an IPv4 instead of SR-MPLS. In a packet received by the router in the instance 3, an outer layer includes an SR-MPLS header and an inner layer includes an IPv4 packet.

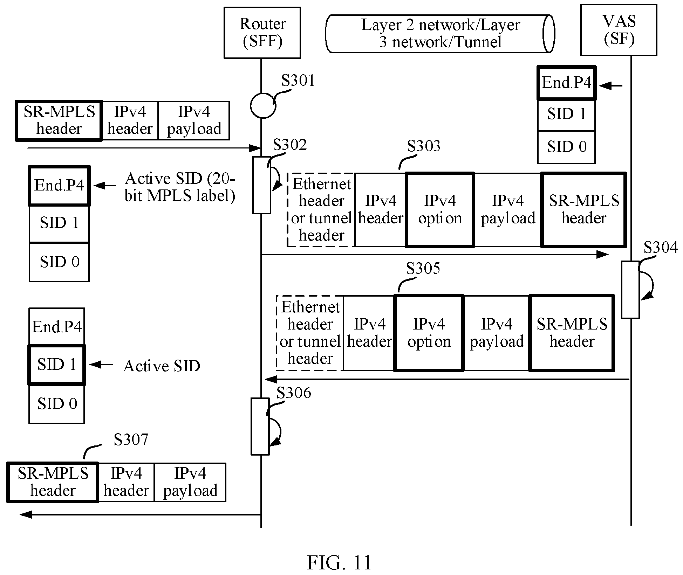

FIG. 11 shows a flowchart of the instance 3. A specific procedure of the instance 3 is equivalent to replacing the SRv6 header in the instance 1 with an SR-MPLS header, replacing the SID list in the SRH in the instance 1 with a label stack, and replacing the destination address in the IPv6 basic header, namely, the information that serves as the active SID, with a topmost label of the label stack.

In addition, there may be some differences between implementation details in the instance 3 and implementation details in the instance 1. For example, the SFF in the instance 1 uses the SID in the segment list in the SRH to update the destination address in the IPv6 basic header in step S302, and the SFF in the instance 3 pops up the topmost label of the label stack in step S302. In the instance 1, operations on the SRv6 SRH are performed by the router from the bottom up, but in the instance 3, operations on an MPLS label stack are performed from top to bottom. A SID type defined in the instance 3 may be renamed, for example, Node.P4 instead of End.P4.

### Instance 4

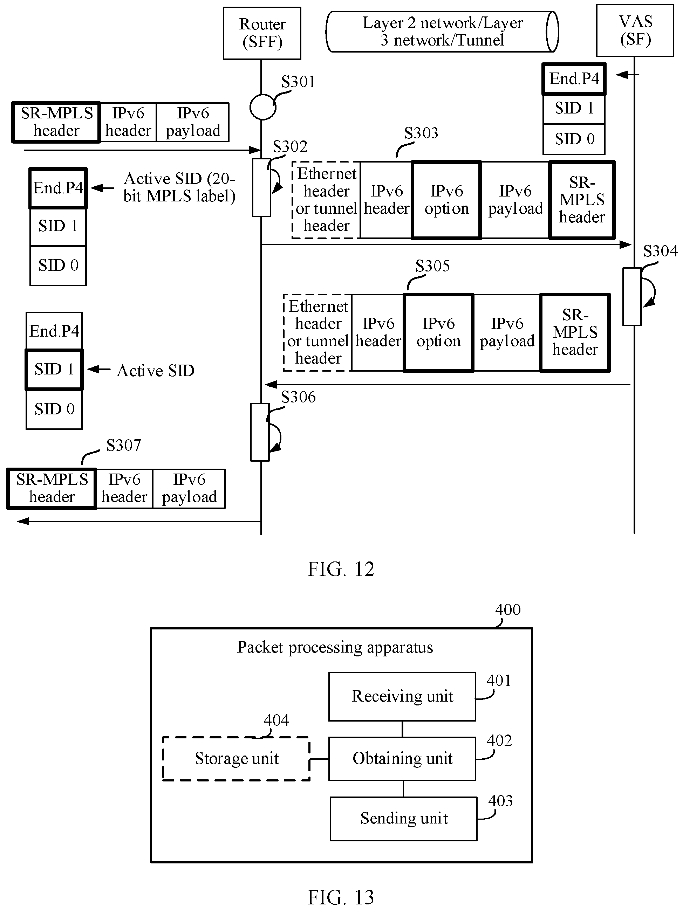

The instance 4 provides a method for implementing an SR-MPLS IPv6 service function chain. In the instance 4, the VAS supports an IPv6 instead of SR-MPLS. In a packet received by the router in the instance 4, an outer layer includes an SR-MPLS header and an inner layer includes an IPv6 packet. FIG. 12 shows a flowchart of the instance 4. A specific procedure of the instance 4 is equivalent to replacing the SRv6 header in the instance 1 with an SR-MPLS header, replacing the SRH in the instance 1 with a label stack, replacing the destination address in the IPv6 basic header, namely, the information that serves as the active SID, with a topmost label of the label stack, replacing the IPv4 header in the instance 1 with an IPv6 header, replacing the IPv4 payload in the instance 1 with an IPv6 payload, and replacing the IPv4 option in the instance 1 with an IPv6 option.

It can be learned from the foregoing embodiments that some embodiments of this application have the following technical effects.

First, compared with the SR service function chain static proxy (for example, End.AS), the configuration is simpler and a dynamic SR service is supported.

Second, compared with the SR service function chain dynamic proxy (for example, End.AD), an SFF does not need to generate or maintain a cache when supporting the SR dynamic service. This greatly reduces implementation complexity, reduces resource overheads of a device, provides higher forwarding performance, and can support a larger service specification.

Third, easy deployment. In most cases, a VAS does not need to be aware of a boundary of an IPv4 payload. Therefore, the VAS device does not need to be aware of a specified IPv4 packet format defined in the present invention, and only needs to modify a router (proxy) device. Therefore, a third-party IPv4 VAS on a live network can be seamlessly accessed.

Fourth, the embodiments are applicable to both an SR-MPLS SFC and an SRv6 SFC.

Fifth, the embodiments support both a case in which the SFF accesses an IPv4 VAS and a case in which the SFF accesses an IPv6 VAS.

FIG. 13 is a schematic diagram of a structure of a packet processing apparatus according to an embodiment of this application. The packet processing apparatus shown in FIG. 13 is disposed in an SFF (SR proxy), and a packet processing apparatus 400 includes a receiving unit 401, an obtaining unit 402, and a sending unit 403. Optionally, the packet processing apparatus 400 further includes a storage unit 404.

Optionally, with reference to the application scenario shown in FIG. 6, the packet processing apparatus 400 shown in FIG. 13 is disposed in the SFF 111 or the SFF 121 in FIG. 6.

Optionally, with reference to the method procedure shown in FIG. 7, the packet processing apparatus 400 shown in FIG. 13 is disposed in the SFF in FIG. 7. The receiving unit 401 is configured to support the packet processing apparatus 400 in performing step S201. The obtaining unit 402 is configured to support the packet processing apparatus 400 in performing step S202. The sending unit 403 is configured to support the packet processing apparatus 400 in performing step S203. Optionally, the receiving unit 401 is further configured to support the packet processing apparatus 400 in performing step S207. The obtaining unit 402 is configured to support the packet processing apparatus 400 in performing step S208. The sending unit 403 is configured to support the packet processing apparatus 400 in performing step S209. The storage unit 404 is configured to support the packet processing apparatus 400 in storing a correspondence between a first SID and a SID type.

Optionally, with reference to FIG. 9, FIG. 10, FIG. 11, or FIG. 12, the packet processing apparatus 400 shown in FIG. 13 is disposed in the router in the method procedure shown in FIG. 9, FIG. 10, FIG. 11, or FIG. 12. The obtaining unit 402 is configured to support the packet processing apparatus 400 in performing step S302. The sending unit 403 is configured to support the packet processing apparatus 400 in performing step S303. The obtaining unit 402 is configured to support the packet processing apparatus 400 in performing step S306. The sending unit 403 is configured to support the packet processing apparatus 400 in performing step S307. The storage unit 404 is configured to support the packet processing apparatus 400 in storing the configuration generated in step S301.

The apparatus embodiment described in FIG. 13 is merely an example. For example, division into the units is merely logical function division and may be other division during actual implementation. For example, a plurality of units or components may be combined or integrated into another system, or some features may be ignored or not performed. Function units in embodiments of this application may be integrated into one processing unit, or each of the units may exist alone physically, or two or more units are integrated into one unit.

All or some of the units in the packet processing apparatus 400 are implemented by using software, hardware, firmware, or any combination thereof.

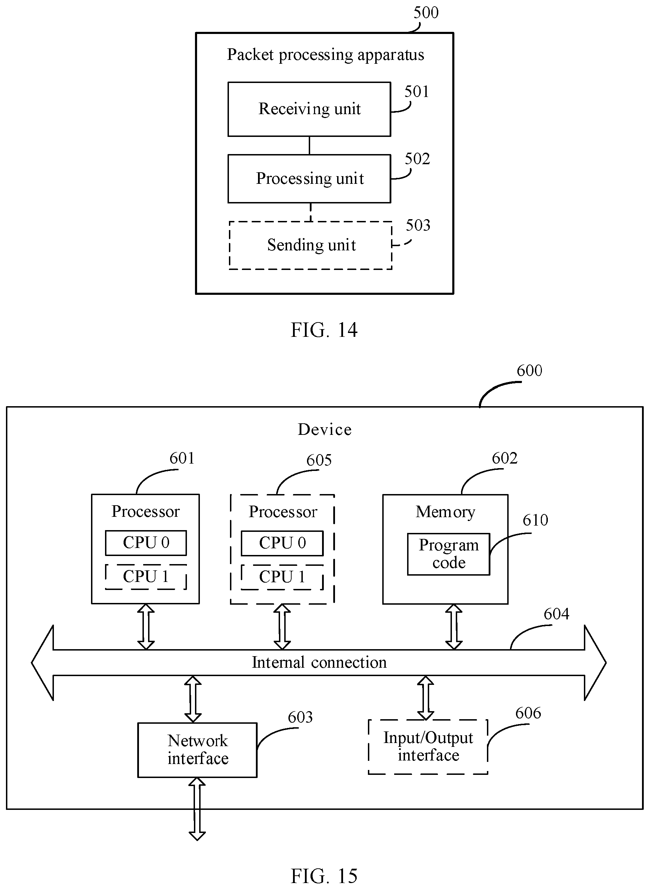

When software is used for implementation, for example, the obtaining unit 402 is implemented by a software functional unit generated after at least one processor 601 in FIG. 15 reads program code stored in a memory 602.

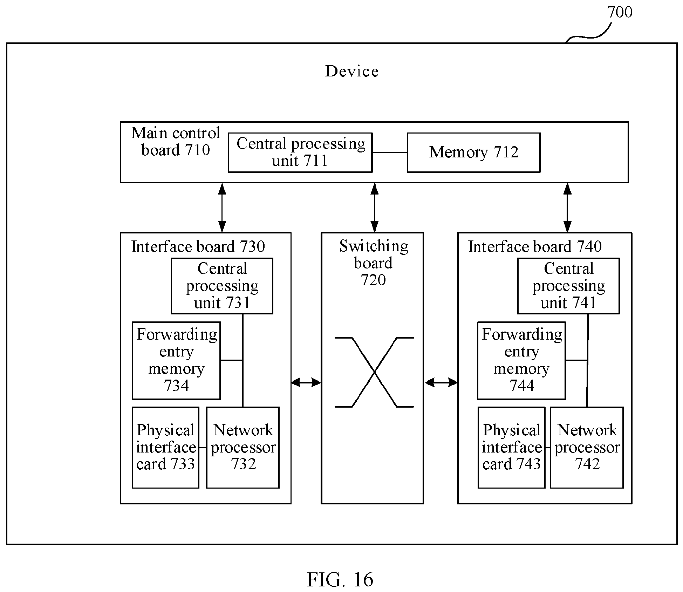

When hardware is used for implementation, the units in FIG. 13 are optionally separately implemented by different hardware in a device of a computer type. The following separately uses examples for description with reference to hardware structures shown in FIG. 15 and FIG. 16.

For example, with reference to FIG. 15, the receiving unit 401 and the sending unit 403 are implemented by a network interface 603 in FIG. 15. The obtaining unit 402 is implemented by some of processing resources in the at least one processor 601 (for example, one or two cores in a multi-core processor) in FIG. 15, or is implemented by using a programmable device such as a field-programmable gate array (field-programmable gate array, FPGA) or a coprocessor. The storage unit 404 is implemented by the memory 602 in FIG. 15.

For another example, with reference to FIG. 16, the receiving unit 401 and the sending unit 403 are implemented by a physical interface card 733 on an interface board 730 in FIG. 16. The obtaining unit 402 is implemented by a network processor 732 on the interface board 730 in FIG. 16. The storage unit 404 is implemented by a forwarding entry memory 734 on the interface board 730 in FIG. 16.

FIG. 14 is a schematic diagram of a structure of a packet processing apparatus according to an embodiment of this application. A packet processing apparatus 500 shown in FIG. 14 is disposed in an SF. The packet processing apparatus 500 includes a receiving unit 501 and a processing unit 502. Optionally, the packet processing apparatus 500 further includes a sending unit 503.

Optionally, with reference to the application scenario shown in FIG. 6, the packet processing apparatus 500 shown in FIG. 14 is disposed in the SF 112 or the SF 122 in FIG. 6.

Optionally, with reference to the method procedure shown in FIG. 7, the packet processing apparatus 500 shown in FIG. 14 is disposed in the SF in the method procedure shown in FIG. 7. The receiving unit 501 is configured to support the packet processing apparatus 500 in performing step S204. The processing unit 502 is configured to support the packet processing apparatus 500 in performing step S205. The sending unit 503 is configured to support the packet processing apparatus 500 in performing step S206.

Optionally, with reference to FIG. 9, FIG. 10, FIG. 11, or FIG. 12, the packet processing apparatus 500 shown in FIG. 14 is disposed in the VAS in the method procedure shown in FIG. 9, FIG. 10, FIG. 11, or FIG. 12. The processing unit 502 is configured to support the packet processing apparatus 500 in performing step S304. The sending unit 503 is configured to support the packet processing apparatus 500 in performing step S305.

The apparatus embodiment described in FIG. 14 is merely an example. For example, division into the units is merely logical function division and may be other division during actual implementation. For example, a plurality of units or components may be combined or integrated into another system, or some features may be ignored or not performed. Function units in embodiments of this application may be integrated into one processing unit, or each of the units may exist alone physically, or two or more units are integrated into one unit.

All or some of the units in the packet processing apparatus 500 are implemented by using software, hardware, firmware, or any combination thereof.

When software is used for implementation, for example, the processing unit 502 is implemented by the software functional unit generated after the at least one processor 601 in FIG. 15 reads the program code stored in the memory 602.

When hardware is used for implementation, the units in FIG. 14 are optionally separately implemented by different hardware in a device. For example, with reference to FIG. 15, the receiving unit 501 and the sending unit 503 are implemented by the network interface 603 in FIG. 15. The processing unit 502 is implemented by some of processing resources in the at least one processor 601 (for example, one or two cores in a multi-core processor) in FIG. 15, or is implemented by using a programmable device such as a field-programmable gate array (field-programmable gate array, FPGA) or a coprocessor. For another example, with reference to FIG. 16, the receiving unit 501 and the sending unit 503 are implemented by a physical interface card 733 on an interface board 730 in FIG. 16. The processing unit 502 is implemented by the network processor 732 on the interface board 730 in FIG. 16.

The following describes basic hardware structures of an SFF and an SF.

FIG. 15 is a schematic diagram of a structure of a device 600 according to an embodiment of this application. The device 600 is, for example, a network device (such as a router, a switch, or a firewall), a computer device (such as a server, a host, a personal computer, a notebook computer, or another terminal device).

Optionally, an SFF (SR proxy) is disposed on the device 600 shown in FIG. 15. For example, with reference to the application scenario shown in FIG. 6, the SFF 111 or the SFF 121 in FIG. 6 is optionally disposed in the device 600 shown in FIG. 15. For example, with reference to the method procedure shown in FIG. 7, the SFF in FIG. 7 is disposed in the device 600 shown in FIG. 15, and the device 600 shown in FIG. 15 is configured to perform the steps performed by the SFF in FIG. 7. For example, with reference to FIG. 9, FIG. 10, FIG. 11, or FIG. 12, the device 600 shown in FIG. 15 is the router in FIG. 9, FIG. 10, FIG. 11, or FIG. 12. For example, with reference to FIG. 13, the device 600 shown in FIG. 15 is the packet processing apparatus 400 shown in FIG. 13.

Optionally, an SF is disposed on the device 600 shown in FIG. 15. For example, with reference to the application scenario shown in FIG. 6, the SF 112 or the SF 122 in FIG. 6 is optionally disposed on the device 600 shown in FIG. 15. For example, with reference to the method procedure shown in FIG. 7, the SF in FIG. 7 is disposed in the device 600 shown in FIG. 15, and the device 600 shown in FIG. 15 is configured to perform the steps performed by the SF in FIG. 7. For example, with reference to FIG. 9, FIG. 10, FIG. 11, or FIG. 12, the VAS in FIG. 9, FIG. 10, FIG. 11, or FIG. 12 is disposed in the device 600 shown in FIG. 15. For example, with reference to FIG. 13, the packet processing apparatus 500 shown in FIG. 14 is disposed in the device 600 shown in FIG. 15.

The device 600 includes at least one processor 601, a memory 602, and at least one network interface 603.

The processor 601 is, for example, a general-purpose central processing unit (central processing unit, CPU), a network processor (network processor, NP), a graphics processing unit (graphics processing unit, GPU), a neural-network processing unit (neural-network processing unit, NPU), a data processing unit (data processing unit, DPU), a microprocessor, or one or more integrated circuits configured to implement the solutions of this application. For example, the processor 601 includes an application-specific integrated circuit (application-specific integrated circuit, ASIC), a programmable logic device (programmable logic device, PLD), or a combination thereof. The PLD is, for example, a complex programmable logic device (complex programmable logic device, CPLD), a field-programmable gate array (field-programmable gate array, FPGA), generic array logic (generic array logic, GAL), or any combination thereof.

For example, the memory 602 is a read-only memory (read-only memory, ROM) or another type of static storage device capable of storing static information and instructions, or a random access memory (random access memory, RAM) or another type of dynamic storage device capable of storing information and instructions, or is an electrically erasable programmable read-only memory (electrically erasable programmable read-only Memory, EEPROM), a compact disc read-only memory (compact disc read-only memory, CD-ROM) or other compact disc storage, optical disc storage (including a compact disc, a laser disc, an optical disc, a digital versatile disc, a Blu-ray disc, and the like), a magnetic disk storage medium or another magnetic storage device, or any other medium capable of carrying or storing expected program code in an instruction form or a data structure form and capable of being accessed by a computer. However, the memory is not limited thereto. Optionally, the memory 602 exists independently, and is connected to the processor 601 through an internal connection 604. Alternatively, optionally, the memory 602 and the processor 601 are integrated together.

The network interface 603 is configured to communicate with another device or a communication network by using any transceiver-type apparatus. The network interface 603 includes, for example, at least one of a wired network interface and a wireless network interface. The wired network interface is, for example, an Ethernet interface. The Ethernet interface is, for example, an optical interface, an electrical interface, or a combination thereof. The wireless network interface is, for example, a wireless local area network (wireless local area network, WLAN) interface, a cellular network interface, or a combination thereof.

In some embodiments, the processor 601 includes one or more CPUs, for example, a CPU 0 and a CPU 1 shown in FIG. 15.

In some embodiments, the device 600 optionally includes a plurality of processors, for example, a processor 601 and a processor 605 shown in FIG. 15. Each of these processors is, for example, a single-core processor (single-CPU), or a multi-core processor (multi-CPU). The processor herein optionally refers to one or more devices, circuits, and/or processing cores configured to process data (for example, computer program instructions).

In some embodiments, the device 600 further includes an internal connection 604. The processor 601, the memory 602, and at least one network interface 603 are connected through the internal connection 604. The internal connection 604 includes a path for transmitting information between the foregoing components. Optionally, the internal connection 604 is a board or a bus. Optionally, the internal connection 604 is classified into an address bus, a data bus, a control bus, and the like.

In some embodiments, the device 600 further includes an input/output interface 606. The input/output interface 606 is connected to the internal connection 604.

Optionally, the processor 601 implements the method in the foregoing embodiments by reading the program code 610 stored in the memory 602. Alternatively, the processor 601 implements the method in the foregoing embodiments by using program code in an internal storage. When the processor 601 implements the method in the foregoing embodiments by reading the program code 610 stored in the memory 602, the memory 602 stores the program code for implementing the method provided in embodiments of this application. For more details about implementing the foregoing functions by the processor 601, refer to the descriptions in the foregoing method embodiments. Details are not described herein again.

FIG. 16 is a schematic diagram of a structure of a device 700 according to an embodiment of this application. The device 700 is, for example, a network device (for example, a router, a switch, or a firewall).

Optionally, an SFF (SR proxy) is disposed on the device 700 shown in FIG. 16. For example, with reference to the application scenario shown in FIG. 6, the SFF 111 or the SFF 121 in FIG. 6 is optionally disposed in the device 700 shown in FIG. 16. For example, with reference to the method procedure shown in FIG. 7, the SFF in FIG. 7 is disposed in the device 700 shown in FIG. 16, and the device 700 shown in FIG. 16 is configured to perform the steps performed by the SFF in FIG. 7. For example, with reference to FIG. 9, FIG. 10, FIG. 11, or FIG. 12, the device 700 shown in FIG. 16 is the router in FIG. 9, FIG. 10, FIG. 11, or FIG. 12. For example, with reference to FIG. 13, the packet processing apparatus 400 shown in FIG. 13 is disposed on the device 700 shown in FIG. 16.

Optionally, an SF is disposed on the device 700 shown in FIG. 16. For example, with reference to the application scenario shown in FIG. 6, the SF 112 or the SF 122 in FIG. 6 is optionally disposed on the device 700 shown in FIG. 16. For example, with reference to the method procedure shown in FIG. 7, the SF in FIG. 7 is disposed in the device 700 shown in FIG. 16, and the device 700 shown in FIG. 16 is configured to perform the steps performed by the SF in FIG. 7. For example, with reference to FIG. 9, FIG. 10, FIG. 11, or FIG. 12, the VAS in FIG. 9, FIG. 10, FIG. 11, or FIG. 12 is disposed in the device 700 shown in FIG. 16. For example, with reference to FIG. 13, the packet processing apparatus 500 shown in FIG. 14 is disposed on the device 700 shown in FIG. 16.

The device 700 includes a main control board 710 and an interface board 730.

The main control board is also referred to as a main processing unit (main processing unit, MPU) or a route processor card (route processor card). The main control board 710 is configured to control and manage components in the device 700, including route computation, device management, device maintenance, and protocol processing functions. The main control board 710 includes a central processing unit 711 and a memory 712.

The interface board 730 is also referred to as a line processing unit (line processing unit, LPU) card, a line card (line card), or a service board. The interface board 730 is configured to provide various service interfaces and implement data packet forwarding. The service interface includes but is not limited to an Ethernet interface, a POS (packet over SONET/SDH) interface, and the like. The Ethernet interface is, for example, a flexible Ethernet service interface (flexible Ethernet clients, FlexE clients). The interface board 730 includes a central processing unit 731, a network processor 732, a forwarding entry memory 734, and a physical interface card (physical interface card, PIC) 733.

The central processing unit 731 on the interface board 730 is configured to control and manage the interface board 730 and communicate with the central processing unit 711 on the main control board 710.

The network processor 732 is configured to implement packet forwarding processing. A form of the network processor 732 is, for example, a forwarding chip. Specifically, the network processor 732 is configured to forward a received packet based on a forwarding table stored in the forwarding entry memory 734. If a destination address of the packet is an address of the device 700, the network processor 732 sends the packet to a CPU (for example, the central processing unit 711) for processing. If the destination address of the packet is not the address of the device 700, the network processor 732 searches, based on the destination address, the forwarding table for a next hop and an outbound interface corresponding to the destination address, and forwards the packet to the outbound interface corresponding to the destination address. Processing of an uplink packet includes processing of a packet inbound interface and forwarding table lookup, and processing of a downlink packet includes forwarding table lookup and the like.

The physical interface card 733 is configured to implement a physical layer interconnection function. Original traffic enters the interface board 730 from the physical interface card 733, and a processed packet is sent out from the physical interface card 733. The physical interface card 733, also referred to as a subcard, may be mounted on the interface board 730, and is responsible for converting an optical/electrical signal into a packet, performing validity check on the packet, and forwarding the packet to the network processor 732 for processing. In some embodiments, the central processing unit may alternatively perform a function of the network processor 732, for example, implement software forwarding based on a general CPU. Therefore, the network processor 732 is not necessary in the physical interface card 733.

Optionally, the device 700 includes a plurality of interface boards. For example, the device 700 further includes an interface board 740, and the interface board 740 includes a central processing unit 741, a network processor 742, a forwarding entry memory 744, and a physical interface card 743.

Optionally, the device 700 further includes a switching board 720. The switching board 720 may also be referred to as, for example, a switch fabric unit (switch fabric unit, SFU). When the network device includes a plurality of interface boards 730, the switching board 720 is configured to complete data exchange between the interface boards. For example, the interface board 730 and the interface board 740 communicate with each other by using the switching board 720.

The main control board 710 is coupled to the interface board 730. For example, the main control board 710, the interface boards 730 and 740, and the switching board 720 are connected to a system backplane through a system bus to communicate with each other. In a possible implementation, an inter-process communication (inter-process communication, IPC) channel is established between the main control board 710 and the interface board 730, and the main control board 710 communicates with the interface board 730 through the IPC channel.

Logically, the device 700 includes a control plane and a forwarding plane. The control plane includes the main control board 710 and the central processing unit 731. The forwarding plane includes components that perform forwarding, such as the forwarding entry memory 734, the physical interface card 733, and the network processor 732. The control plane performs functions such as routing, generating a forwarding table, processing signaling and a protocol packet, and configuring and maintaining a device status. The control plane delivers the generated forwarding table to the forwarding plane. On the forwarding plane, based on the forwarding table delivered from the control plane, the network processor 732 looks up the table, and forwards a packet received by the physical interface card 733. For example, the forwarding table delivered by the control plane is stored in the forwarding entry memory 734. In some embodiments, for example, the control plane and the forwarding plane are completely separated, and are not on a same device.

Operations performed on the interface board 740 are consistent with operations performed on the interface board 730. For brevity, details are not described. The device 700 in this embodiment may correspond to the SFF or the SF in the foregoing method embodiments. The main control board 710, the interface board 730, and/or the interface board 740 in the device 700 implement, for example, functions of the edge device or the forwarding device in the foregoing method embodiments and/or various steps implemented by the SFF or the SF. For brevity, details are not described herein again.

It should be noted that there may be one or more main control boards. When there are a plurality of main control boards, the main control boards may include, for example, an active main control board and a standby main control board. There may be one or more interface boards. A network device having a stronger data processing capability provides more interface boards. There may also be one or more physical interface cards on the interface board. There may be no switching board or one or more switching boards. When there are a plurality of switching boards, load balancing and redundancy backup may be implemented together. In a centralized forwarding architecture, the network device may not need the switching board, and the interface board provides a function of processing service data of an entire system. In a distributed forwarding architecture, the network device may have at least one switching board, and data exchange between a plurality of interface boards is implemented by using the switching board, to provide a large-capacity data exchange and processing capability. Therefore, a data access and processing capability of a network device in the distributed architecture is better than that of a device in the centralized architecture. Optionally, the network device may alternatively be in a form in which there is only one card. To be specific, there is no switching board, and functions of the interface board and the main control board are integrated on the card. In this case, the central processing unit on the interface board and the central processing unit on the main control board may be combined into one central processing unit on the card. to perform functions obtained by combining the two central processing units. The device in this form (for example, a network device such as a low-end switch or router) has a weak data exchange and processing capability. A specific architecture that is to be used depends on a specific networking deployment scenario. This is not limited herein.

The one or more SFs mentioned in embodiments of this application may be disposed on one or more devices, for example, a network device or a computer device. A device on which an SF is disposed may be referred to as an SF device for short. The SF in embodiments of this application may be short for a device on which an SF is disposed or an SF device. This is not limited in embodiments of this application.

Embodiments in this specification are all described in a progressive manner. For same or similar parts in the embodiments, refer to each other. Each embodiment focuses on a difference from other embodiments. "For A, refer to B" means that A is the same as B or A is a simple variant of B. In the specification and claims in embodiments of this application, the terms "first", "second", and the like are intended to distinguish between different objects, do not describe a particular order of the objects, and cannot be understood as an indication or implication of relative importance. For example, the first packet and the second packet are used to distinguish between different packets, but are not used to describe a particular sequence of the packets, and it cannot be understood that the first packet is more important than the second packet. In embodiments of this application, unless otherwise stated, "at least one" refers to one or more, and "a plurality of" refers to two or more.

All or some of the foregoing embodiments may be implemented by using software, hardware, firmware, or any combination thereof. When the software is used to implement the embodiments, all or some of the embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device such as a server or a data center that integrates one or more usable media. The usable medium may be a magnetic medium (for example, a floppy disk, a hard disk, or a magnetic tape), an optical medium (for example, a DVD), a semiconductor medium (for example, a solid-state drive (Solid-State Drive, SSD)), or the like.

The foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A packet processing method, wherein the method comprises:
receiving, by a service function forwarder, SFF, a first packet, wherein the first packet comprises a first segment routing header, a first internet protocol, IP, header, and a first IP payload, and the first segment routing header is placed before the first IP header which in turn precedes the first IP payload in the first packet;
obtaining, by the SFF, a second packet based on the first packet, wherein the second packet comprises a second IP header, the first IP payload, and the first segment routing header, and the second IP header is placed before the first IP payload which in turn precedes the first segment routing header in the second packet;
sending, by the SFF, the second packet to a service function, SF, device;
receiving, by the SFF, a third packet from the SF device, wherein the third packet comprises a third IP header, a second IP payload, and the first segment routing header, and the third IP header is placed before the second IP payload which in turn precedes the second IP payload, which in turn precedes the first segment routing header in the third packet;
obtaining, by the SFF, a fourth packet based on the third packet, wherein the fourth packet comprises the first segment routing header, a fourth IP header, and a third IP payload, and the first segment routing header is placed before the fourth IP header which in turn precedes the third IP payload in the fourth packet; and
sending, by the SFF, the fourth packet based on the first segment routing header.

2. The method according to claim 1, wherein the first segment routing header comprises a first segment identifier, SID; the SFF stores a first correspondence, wherein the first correspondence comprises the first SID and a SID type, and the SID type indicates that a segment routing header is not supported; and the obtaining, by the SFF, a second packet based on the first packet comprises:
obtaining, by the SFF, the SID type based on the first SID and the first correspondence; and
performing, by the SFF, first processing on the first packet based on the SID type to obtain the second packet, wherein the first processing comprises: setting the first segment routing header behind the first IP payload, and replacing the first IP header with the second IP header.

3. The method according to claim 1 or 2, wherein the first segment routing header is a segment routing over internet protocol version 6, SRv6, header, the first IP header and the second IP header both are internet protocol version 4, IPv4, headers, and the first IP payload is an IPv4 payload; or
the first segment routing header is an SRv6 header, the first IP header and the second IP header both are internet protocol version 6, IPv6, headers, and the first IP payload is an IPv6 payload.

4. The method according to claim 1 or 2, wherein the first segment routing header is a segment routing-multiprotocol label switching, SR-MPLS, header, the first IP header and the second IP header both are IPv4 headers, and the first IP payload is an IPv4 payload; or
the first segment routing header is an SR-MPLS header, the first IP header and the second IP header both are IPv6 headers, and the first IP payload is an IPv6 payload.

5. The method according to any one of claims 1-4, wherein the obtaining, by the SFF, a fourth packet based on the third packet comprises:
performing, by the SFF, second processing on the third packet based on the third IP header, to obtain the fourth packet, wherein the second processing comprises: replacing the third IP header with the fourth IP header, and placing the first segment routing header before the fourth IP header which in turn precedes the third IP payload;
performing, by the SFF, second processing on the third packet based on an interface for receiving the third packet, to obtain the fourth packet, wherein the interface for receiving the third packet is an inbound interface bound to the first SID, and the second processing comprises: replacing the third IP header with the fourth IP header, and placing the first segment routing header before the fourth IP header which in turn precedes the third IP payload; or
performing, by the SFF, second processing on the third packet based on the third IP header and an interface for receiving the third packet, to obtain the fourth packet, wherein the interface for receiving the third packet is an inbound interface bound to the first SID, and the second processing comprises: replacing the third IP header with the fourth IP header, and placing the first segment routing header before the fourth IP header which in turn precedes the third IP payload.

6. The method according to any one of claims 1-5, wherein the third IP header further comprises first length information, and the first length information is used to determine a location of the first segment routing header in the third packet.

7. A packet processing apparatus (400), wherein the apparatus is disposed in a service function forwarder, SFF, and comprises:
a receiving unit (401), configured to receive a first packet, wherein the first packet comprises a first segment routing header, a first internet protocol, IP, header, and a first IP payload, and the first segment routing header is placed before the first IP header which in turn precedes the first IP payload in the first packet;
an obtaining unit (402), configured to obtain a second packet based on the first packet, wherein the second packet comprises a second IP header, the first IP payload, and the first segment routing header, and the second IP header is placed before the first IP payload which in turn precedes the first segment routing header in the second packet; and
a sending unit (403), configured to send the second packet to an SF device;
wherein the receiving unit is further configured to receive a third packet from the SF device, wherein the third packet comprises a third IP header, a second IP payload, and the first segment routing header, and the third IP header is placed before the second IP payload which in turn precedes the second IP payload, which in turn precedes the first segment routing header in the third packet;
the obtaining unit is further configured to obtain a fourth packet based on the third packet, wherein the fourth packet comprises the first segment routing header, a fourth IP header, and a third IP payload, and the first segment routing header is placed before the fourth IP header which in turn precedes the third IP payload in the fourth packet; and
the sending unit is further configured to send the fourth packet based on the first segment routing header.

8. The apparatus according to claim 7, wherein the first segment routing header comprises a first segment identifier, SID; the SFF further comprises a storage unit (404), wherein the storage unit is configured to store a first correspondence, the first correspondence comprises the first SID and a SID type, and the SID type indicates that a segment routing header is not supported; and the obtaining unit is configured to obtain the SID type based on the first SID and the first correspondence, and perform first processing on the first packet based on the SID type to obtain the second packet, wherein the first processing comprises: setting the first segment routing header behind the first IP payload, and replacing the first IP header with the second IP header.

9. The apparatus according to claim 7 or 8, wherein the obtaining unit is configured to: perform second processing on the third packet based on the third IP header, to obtain the fourth packet, wherein the second processing comprises: replacing the third IP header with the fourth IP header, and placing the first segment routing header before the fourth IP header which in turn precedes the third IP payload; perform second processing on the third packet based on an interface for receiving the third packet, to obtain the fourth packet, wherein the interface for receiving the third packet is an inbound interface bound to the first SID, and the second processing comprises: replacing the third IP header with the fourth IP header, and placing the first segment routing header before the fourth IP header which in turn precedes the third IP payload; or perform second processing on the third packet based on the third IP header and an interface for receiving the third packet, to obtain the fourth packet, wherein the interface for receiving the third packet is an inbound interface bound to the first SID, and the second processing comprises: replacing the third IP header with the fourth IP header, and placing the first segment routing header before the fourth IP header which in turn precedes the third IP payload.

10. A packet processing apparatus (500), wherein the apparatus is disposed in a service function, SF, device and comprises:
a receiving unit (501), configured to receive a first packet from a service function forwarder, SFF, wherein the first packet comprises a first internet protocol, IP, header, a first IP payload, and a first segment routing header, and the first IP header is placed before the first IP payload which in turn precedes the first segment routing header in the first packet;
a processing unit (502), configured to perform service processing based on the first packet; and
a sending unit (503), configured to send, to the SFF, a second packet obtained through the service processing, wherein the second packet comprises a second IP header, a second IP payload, and the first segment routing header, and the second IP header is placed before the second IP payload which in turn precedes the first segment routing header in the second packet.

11. The apparatus according to claim 10, wherein the second IP header further comprises first length information, and the first length information is used to determine a location of the first segment routing header in the second packet.

12. The apparatus according to claims 10 or 11, wherein the first IP header comprises identification information, and the identification information identifies that the first segment routing header is set behind the first IP payload.

## Patentansprüche

1. Paketverarbeitungsverfahren, wobei das Verfahren Folgendes umfasst:
Empfangen, durch einen Service-Function-Forwarder, SFF, eines ersten Pakets, wobei das erste Paket einen ersten Segment-Routing-Header, einen ersten Internetprotokoll-Header, IP-Header, und eine erste IP-Nutzlast umfasst und der erste Segment-Routing-Header vor dem ersten IP-Header platziert ist, der wiederum der ersten IP-Nutzlast in dem ersten Paket vorangeht;
Erlangen, durch den SFF, eines zweiten Pakets basierend auf dem ersten Paket, wobei das zweite Paket einen zweiten IP-Header, die erste IP-Nutzlast und den ersten Segment-Routing-Header umfasst und der zweite IP-Header vor der ersten IP-Nutzlast platziert ist, die wiederum dem ersten Segment-Routing-Header in dem zweiten Paket vorangeht;
Senden, durch den SFF, des zweiten Pakets an eine Service-Function-Einrichtung, SF-Einrichtung;
Empfangen, durch den SFF, eines dritten Pakets von der SF-Einrichtung, wobei das dritte Paket einen dritten IP-Header, eine zweite IP-Nutzlast und den ersten Segment-Routing-Header umfasst und der dritte IP-Header vor der zweiten IP-Nutzlast platziert ist, die wiederum der zweiten IP-Nutzlast vorangeht, die wiederum dem ersten Segment-Routing-Header in dem dritten Paket vorangeht;
Erlangen, durch den SFF, eines vierten Pakets basierend auf dem dritten Paket, wobei das vierte Paket den ersten Segment-Routing-Header, einen vierten IP-Header und eine dritte IP-Nutzlast umfasst und der erste Segment-Routing-Header vor dem vierten IP-Header platziert ist, der wiederum der dritten IP-Nutzlast in dem vierten Paket vorangeht; und
Senden, durch den SFF, des vierten Pakets basierend auf dem ersten Segment-Routing-Header.

2. Verfahren nach Anspruch 1, wobei der erste Segment-Routing-Header eine erste Segmentkennung, SID, umfasst; der SFF eine erste Entsprechung speichert, wobei die erste Entsprechung die erste SID und einen SID-Typ umfasst und der SID-Typ angibt, dass ein Segment-Routing-Header nicht unterstützt wird; und das Erlangen, durch den SFF, eines zweiten Pakets basierend auf dem ersten Paket Folgendes umfasst:
Erlangen, durch den SFF, des SID-Typs basierend auf der ersten SID und der ersten Entsprechung; und
Durchführen, durch den SFF, einer ersten Verarbeitung an dem ersten Paket basierend auf dem SID-Typ, um das zweite Paket zu erlangen, wobei die erste Verarbeitung Folgendes umfasst: Einrichten des ersten Segment-Routing-Headers hinter der ersten IP-Nutzlast und Ersetzen des ersten IP-Headers durch den zweiten IP-Header.

3. Verfahren nach Anspruch 1 oder 2, wobei der erste Segment-Routing-Header ein Segment-Routing-Over-Internet-Protocol-Version-6-Header, SRv6-Header, ist, der erste IP-Header und der zweite IP-Header beide Internet-Protocol-Version-4-Header, IPv4-Header, sind und die erste IP-Nutzlast eine IPv4-Nutzlast ist; oder
der erste Segment-Routing-Header ein SRv6-Header ist, der erste IP-Header und der zweite IP-Header beide Internet-Protocol-Version-6-Header, IPv6-Header, sind und die erste IP-Nutzlast eine IPv6-Nutzlast ist.

4. Verfahren nach Anspruch 1 oder 2, wobei der erste Segment-Routing-Header ein Segment-Routing-Multiprotocol-Label-Switching-Header, SR-MPLS-Header ist, der erste IP-Header und der zweite IP-Header beide IPv4-Header sind und die erste IP-Nutzlast eine IPv4-Nutzlast ist; oder
der erste Segment-Routing-Header ein SR-MPLS-Header ist, der erste IP-Header und der zweite IP-Header beide IPv6-Header sind und die erste IP-Nutzlast eine IPv6-Nutzlast ist.

5. Verfahren nach einem der Ansprüche 1-4, wobei das Erlangen, durch den SFF, eines vierten Pakets basierend auf dem dritten Paket Folgendes umfasst:
Durchführen, durch den SFF, einer zweiten Verarbeitung an dem dritten Paket basierend auf dem dritten IP-Header, um das vierte Paket zu erlangen, wobei die zweite Verarbeitung Folgendes umfasst: Ersetzen des dritten IP-Headers durch den vierten IP-Header und Platzieren des ersten Segment-Routing-Headers vor dem vierten IP-Header, der wiederum der dritten IP-Nutzlast vorangeht;
Durchführen, durch den SFF, einer zweiten Verarbeitung an dem dritten Paket basierend auf einer Schnittstelle zum Empfangen des dritten Pakets, um das vierte Paket zu erlangen, wobei die Schnittstelle zum Empfangen des dritten Pakets eine Eingangsschnittstelle ist, die an die erste SID gebunden ist, und die zweite Verarbeitung Folgendes umfasst: Ersetzen des dritten IP-Headers durch den vierten IP-Header und Platzieren des ersten Segment-Routing-Headers vor dem vierten IP-Header, der wiederum der dritten IP-Nutzlast vorangeht; oder
Durchführen, durch den SFF, einer zweiten Verarbeitung an dem dritten Paket basierend auf dem dritten IP-Header und einer Schnittstelle zum Empfangen des dritten Pakets, um das vierte Paket zu erlangen, wobei die Schnittstelle zum Empfangen des dritten Pakets eine Eingangsschnittstelle ist, die an die erste SID gebunden ist, und die zweite Verarbeitung Folgendes umfasst: Ersetzen des dritten IP-Headers durch den vierten IP-Header und Platzieren des ersten Segment-Routing-Headers vor dem vierten IP-Header, der wiederum der dritten IP-Nutzlast vorangeht.

6. Verfahren nach einem der Ansprüche 1-5, wobei der dritte IP-Header ferner erste Längeninformationen umfasst und die ersten Längeninformationen dazu verwendet werden, eine Lage des ersten Segment-Routing-Headers in dem dritten Paket zu bestimmen.

7. Paketverarbeitungsvorrichtung (400), wobei die Vorrichtung in einem Service-Function-Forwarder, SFF, angeordnet ist und Folgendes umfasst:
eine Empfangseinheit (401), die dazu konfiguriert ist, ein erstes Paket zu empfangen, wobei das erste Paket einen ersten Segment-Routing-Header, einen ersten Internetprotokoll-Header, IP-Header, und eine erste IP-Nutzlast umfasst und der erste Segment-Routing-Header vor dem ersten IP-Header platziert ist, der wiederum der ersten IP-Nutzlast in dem ersten Paket vorangeht;
eine Erlangungseinheit (402), die dazu konfiguriert ist, ein zweites Paket basierend auf dem ersten Paket zu erlangen, wobei das zweite Paket einen zweiten IP-Header, die erste IP-Nutzlast und den ersten Segment-Routing-Header umfasst und der zweite IP-Header vor der ersten IP-Nutzlast platziert ist, die wiederum dem ersten Segment-Routing-Header in dem zweiten Paket vorangeht; und
eine Sendeeinheit (403), die dazu konfiguriert ist, das zweite Paket an eine SF-Einrichtung zu senden;
wobei die Empfangseinheit ferner dazu konfiguriert ist, ein drittes Paket von der SF-Einrichtung zu empfangen, wobei das dritte Paket einen dritten IP-Header, eine zweite IP-Nutzlast und den ersten Segment-Routing-Header umfasst und der dritte IP-Header vor der zweiten IP-Nutzlast platziert ist, die wiederum der zweiten IP-Nutzlast vorangeht, die wiederum dem ersten Segment-Routing-Header in dem dritten Paket vorangeht;
wobei die Erlangungseinheit ferner dazu konfiguriert ist, ein viertes Paket basierend auf dem dritten Paket zu erlangen, wobei das vierte Paket den ersten Segment-Routing-Header, einen vierten IP-Header und eine dritte IP-Nutzlast umfasst und der erste Segment-Routing-Header vor dem vierten IP-Header platziert ist, der wiederum der dritten IP-Nutzlast in dem vierten Paket vorangeht; und
wobei die Sendeeinheit ferner dazu konfiguriert ist, das vierte Paket basierend auf dem ersten Segment-Routing-Header zu senden.

8. Vorrichtung nach Anspruch 7, wobei der erste Segment-Routing-Header eine erste Segmentkennung, SID, umfasst; der SFF ferner eine Speichereinheit (404) umfasst, wobei die Speichereinheit dazu konfiguriert ist, eine erste Entsprechung zu speichern, wobei die erste Entsprechung die erste SID und einen SID-Typ umfasst und der SID-Typ angibt, dass ein Segment-Routing-Header nicht unterstützt wird; und die Erlangungseinheit dazu konfiguriert ist, den SID-Typ basierend auf der ersten SID und der ersten Entsprechung zu erlangen und eine erste Verarbeitung an dem ersten Paket basierend auf dem SID-Typ durchzuführen, um das zweite Paket zu erlangen, wobei die erste Verarbeitung Folgendes umfasst: Einrichten des ersten Segment-Routing-Headers hinter der ersten IP-Nutzlast und Ersetzen des ersten IP-Headers durch den zweiten IP-Header.

9. Vorrichtung nach Anspruch 7 oder 8, wobei die Erlangungseinheit zu Folgendem konfiguriert ist: Durchführen einer zweiten Verarbeitung an dem dritten Paket basierend auf dem dritten IP-Header, um das vierte Paket zu erlangen, wobei die zweite Verarbeitung Folgendes umfasst: Ersetzen des dritten IP-Headers durch den vierten IP-Header und Platzieren des ersten Segment-Routing-Headers vor dem vierten IP-Header, der wiederum der dritten IP-Nutzlast vorausgeht; Durchführen einer zweiten Verarbeitung an dem dritten Paket basierend auf einer Schnittstelle zum Empfangen des dritten Pakets, um das vierte Paket zu erlangen, wobei die Schnittstelle zum Empfangen des dritten Pakets eine Eingangsschnittstelle ist, die an die erste SID gebunden ist, und die zweite Verarbeitung Folgendes umfasst: Ersetzen des dritten IP-Headers durch den vierten IP-Header und Platzieren des ersten Segment-Routing-Headers vor dem vierten IP-Header, der wiederum der dritten IP-Nutzlast vorausgeht; oder Durchführen einer zweiten Verarbeitung an dem dritten Paket basierend auf dem dritten IP-Header und einer Schnittstelle zum Empfangen des dritten Pakets, um das vierte Paket zu erlangen, wobei die Schnittstelle zum Empfangen des dritten Pakets eine Eingangsschnittstelle ist, die an die erste SID gebunden ist, und die zweite Verarbeitung Folgendes umfasst: Ersetzen des dritten IP-Headers durch den vierten IP-Header und Platzieren des ersten Segment-Routing-Headers vor dem vierten IP-Header, der wiederum der dritten IP-Nutzlast vorausgeht.

10. Paketverarbeitungsvorrichtung (500), wobei die Vorrichtung in einer Service-Function-Einrichtung, SF-Einrichtung, angeordnet ist und Folgendes umfasst:
eine Empfangseinheit (501), die dazu konfiguriert ist, ein erstes Paket von einem Service-Function-Forwarder, SFF, zu empfangen, wobei das erste Paket einen ersten Internetprotokoll-Header, IP-Header, eine erste IP-Nutzlast und einen ersten Segment-Routing-Header umfasst und der erste IP-Header vor der ersten IP-Nutzlast platziert ist, die wiederum dem ersten Segment-Routing-Header in dem ersten Paket vorangeht;
eine Verarbeitungseinheit (502), die dazu konfiguriert ist, eine Dienstverarbeitung basierend auf dem ersten Paket durchzuführen; und
eine Sendeeinheit (503), die dazu konfiguriert ist, an den SFF, ein zweites Paket, das durch die Dienstverarbeitung erlangt wird, zu senden, wobei das zweite Paket einen zweiten IP-Header, eine zweite IP-Nutzlast und den ersten Segment-Routing-Header umfasst und der zweite IP-Header vor der zweiten IP-Nutzlast platziert ist, die wiederum dem ersten Segment-Routing-Header in dem zweiten Paket vorangeht.

11. Vorrichtung nach Anspruch 10, wobei der zweite IP-Header ferner erste Längeninformationen umfasst und die ersten Längeninformationen dazu verwendet werden, eine Lage des ersten Segment-Routing-Headers in dem zweiten Paket zu bestimmen.

12. Vorrichtung nach Anspruch 10 oder 11, wobei der erste IP-Header Identifikationsinformationen umfasst und die Identifikationsinformationen identifizieren, dass der erste Segment-Routing-Header hinter der ersten IP-Nutzlast eingerichtet ist.

## Revendications

1. Procédé de traitement de paquets, dans lequel le procédé comprend :
la réception, par un transmetteur de fonction de service, SFF, d'un premier paquet, dans lequel le premier paquet comprend un premier en-tête de routage de segment, un premier en-tête de protocole Internet, IP, et une première charge utile IP, et le premier en-tête de routage de segment est placé avant le premier en-tête IP qui à son tour précède la première charge utile IP dans le premier paquet ;
l'obtention, par le SFF, d'un deuxième paquet sur la base du premier paquet, dans lequel le deuxième paquet comprend un deuxième en-tête IP, la première charge utile IP, et le premier en-tête de routage de segment, et le deuxième en-tête IP est placé avant la première charge utile IP qui à son tour précède le premier en-tête de routage de segment dans le deuxième paquet ;
l'envoi, par le SFF, du deuxième paquet à un dispositif de fonction de service, SF ;
la réception, par le SFF, d'un troisième paquet provenant du dispositif SF, dans lequel le troisième paquet comprend un troisième en-tête IP, une deuxième charge utile IP, et le premier en-tête de routage de segment, et le troisième en-tête IP est placé avant la deuxième charge utile IP qui à son tour précède la deuxième charge utile IP, qui à son tour précède le premier en-tête de routage de segment dans le troisième paquet ;
l'obtention, par le SFF, d'un quatrième paquet sur la base du troisième paquet, dans lequel le quatrième paquet comprend le premier en-tête de routage de segment, un quatrième en-tête IP, et une troisième charge utile IP, et le premier en-tête de routage de segment est placé avant le quatrième en-tête IP qui à son tour précède la troisième charge utile IP dans le quatrième paquet ; et
l'envoi, par le SFF, du quatrième paquet sur la base du premier en-tête de routage de segment.

2. Procédé selon la revendication 1, dans lequel le premier en-tête de routage de segment comprend un premier identifiant de segment, SID ; le SFF stocke une première correspondance, dans lequel la première correspondance comprend le premier SID et un type de SID, et le type de SID indique qu'un en-tête de routage de segment n'est pas pris en charge ; et l'obtention, par le SFF, d'un deuxième paquet sur la base du premier paquet comprend :
l'obtention, par le SFF, du type de SID sur la base du premier SID et de la première correspondance ; et
la réalisation, par le SFF, d'un premier traitement sur le premier paquet sur la base du type de SID pour obtenir le deuxième paquet, dans lequel le premier traitement comprend : la définition du premier en-tête de routage de segment derrière la première charge utile IP, et le remplacement du premier en-tête IP par le deuxième en-tête IP.

3. Procédé selon la revendication 1 ou 2, dans lequel le premier en-tête de routage de segment est un en-tête de routage de segment sur protocole Internet version 6, SRv6, le premier en-tête IP et le deuxième en-tête IP sont des en-têtes de protocole Internet version 4, IPv4, et la première charge utile IP est une charge utile IPv4 ; ou
le premier en-tête de routage de segment est un en-tête SRv6, le premier en-tête IP et le deuxième en-tête IP sont des en-têtes de protocole Internet version 6, IPv6, et la première charge utile IP est une charge utile IPv6.

4. Procédé selon la revendication 1 ou 2, dans lequel le premier en-tête de routage de segment est un en-tête de routage de segment à commutation multiprotocole par étiquette, SR-MPLS, le premier en-tête IP et le deuxième en-tête IP sont des en-têtes IPv4, et la première charge utile IP est une charge utile IPv4 ; ou
le premier en-tête de routage de segment est un en-tête SR-MPLS, le premier en-tête IP et le deuxième en-tête IP sont des en-têtes IPv6, et la première charge utile IP est une charge utile IPv6.

5. Procédé selon l'une quelconque des revendications 1 à 4, dans lequel l'obtention, par le SFF, d'un quatrième paquet sur la base du troisième paquet comprend :
la réalisation, par le SFF, d'un second traitement sur le troisième paquet sur la base du troisième en-tête IP, pour obtenir le quatrième paquet, dans lequel le deuxième traitement comprend : le remplacement du troisième en-tête IP par le quatrième en-tête IP, et le placement du premier en-tête de routage de segment avant le quatrième en-tête IP qui à son tour précède la troisième charge utile IP ;
la réalisation, par le SFF, d'un second traitement sur le troisième paquet sur la base d'une interface de réception du troisième paquet, pour obtenir le quatrième paquet, dans lequel l'interface de réception du troisième paquet est une interface entrante liée au premier SID, et le second traitement comprend : le remplacement du troisième en-tête IP par le quatrième en-tête IP, et le placement du premier en-tête de routage de segment avant le quatrième en-tête IP qui à son tour précède la troisième charge utile IP ; ou
la réalisation, par le SFF, d'un second traitement sur le troisième paquet sur la base d'un troisième en-tête IP et d'une interface de réception du troisième paquet, pour obtenir le quatrième paquet, dans lequel l'interface de réception du troisième paquet est une interface entrante liée au premier SID, et le second traitement comprend : le remplacement du troisième en-tête IP par le quatrième en-tête IP, et le placement du premier en-tête de routage de segment avant le quatrième en-tête IP qui à son tour précède la troisième charge utile IP.

6. Procédé selon l'une quelconque des revendications 1 à 5, dans lequel le troisième en-tête IP comprend également de premières informations de longueur, et les premières informations de longueur sont utilisées pour déterminer un emplacement du premier en-tête de routage de segment dans le troisième paquet.

7. Appareil de traitement de paquets (400), dans lequel l'appareil est disposé dans un transmetteur de fonction de service, SFF, et comprend :
une unité de réception (401), configurée pour recevoir un premier paquet, dans lequel le premier paquet comprend un premier en-tête de routage de segment, un premier en-tête de protocole Internet, IP, et une première charge utile IP, et le premier en-tête de routage de segment est placé avant le premier en-tête IP qui à son tour précède la première charge utile IP dans le premier paquet ;
une unité d'obtention (402), configurée pour obtenir un deuxième paquet sur la base du premier paquet, dans lequel le deuxième paquet comprend un deuxième en-tête IP, la première charge utile IP, et le premier en-tête de routage de segment, et le deuxième en-tête IP est placé avant la première charge utile IP qui à son tour précède le premier en-tête de routage de segment dans le deuxième paquet ; et
une unité d'envoi (403), configurée pour envoyer le deuxième paquet à un dispositif SF ;
dans lequel l'unité de réception est également configurée pour recevoir un troisième paquet provenant du dispositif SF, dans lequel le troisième paquet comprend un troisième en-tête IP, une deuxième charge utile IP, et le premier en-tête de routage de segment, et le troisième en-tête IP est placé avant la deuxième charge utile IP qui à son tour précède la deuxième charge utile IP, qui à son tour précède le premier en-tête de routage de segment dans le troisième paquet ;
l'unité d'obtention est également configurée pour obtenir un quatrième paquet sur la base du troisième paquet, dans lequel le quatrième paquet comprend le premier en-tête de routage de segment, un quatrième en-tête IP, et une troisième charge utile IP, et le premier en-tête de routage de segment est placé avant le quatrième en-tête IP qui à son tour précède la troisième charge utile IP dans le quatrième paquet ; et
l'unité d'envoi est également configurée pour envoyer le quatrième paquet sur la base du premier en-tête de routage de segment.

8. Appareil selon la revendication 7, dans lequel le premier en-tête de routage de segment comprend un premier identifiant de segment, SID ; le SFF comprend également une unité de stockage (404), dans lequel l'unité de stockage est configurée pour stocker une première correspondance, la première correspondance comprend le premier SID et un type de SID, et le type de SID indique qu'un en-tête de routage de segment n'est pas pris en charge ; et l'unité d'obtention est configurée pour obtenir le type de SID sur la base du premier SID et de la première correspondance, et réaliser un premier traitement sur le premier paquet sur la base du type de SID pour obtenir le deuxième paquet, dans lequel le premier traitement comprend : la définition du premier en-tête de routage de segment derrière la première charge utile IP, et le remplacement du premier en-tête IP par le deuxième en-tête IP.

9. Appareil selon la revendication 7 ou 8, dans lequel l'unité d'obtention est configurée pour : réaliser un second traitement sur le troisième paquet sur la base du troisième en-tête IP, pour obtenir le quatrième paquet, dans lequel le second traitement comprend : le remplacement du troisième en-tête IP par le quatrième en-tête IP, et le placement du premier en-tête de routage de segment avant le quatrième en-tête IP qui précède à son tour la troisième charge utile IP ; réaliser un second traitement sur le troisième paquet sur la base d'une interface de réception du troisième paquet, pour obtenir le quatrième paquet, dans lequel l'interface de réception du troisième paquet est une interface entrante liée au premier SID, et le second traitement comprend : le remplacement du troisième en-tête IP par le quatrième en-tête IP, et le placement du premier en-tête de routage de segment avant le quatrième en-tête IP qui précède à son tour la troisième charge utile IP ; ou réaliser un second traitement sur le troisième paquet sur la base du troisième en-tête IP et d'une interface de réception du troisième paquet, pour obtenir le quatrième paquet, dans lequel l'interface de réception du troisième paquet est une interface entrante liée au premier SID, et le second traitement comprend : le remplacement du troisième en-tête IP par le quatrième en-tête IP, et le placement du premier en-tête de routage de segment avant le quatrième en-tête IP qui à son tour précède la troisième charge utile IP.

10. Appareil de traitement de paquets (500), dans lequel l'appareil est disposé dans un dispositif de fonction de service, SF, et comprend :
une unité de réception (501), configurée pour recevoir un premier paquet provenant d'un transmetteur de fonction de service, SFF, dans lequel le premier paquet comprend un premier en-tête de protocole Internet, IP, une première charge utile IP, et un premier en-tête de routage de segment, et le premier en-tête IP est placé avant la première charge utile IP qui à son tour précède le premier en-tête de routage de segment dans le premier paquet ;
une unité de traitement (502), configurée pour réaliser un traitement de service sur la base du premier paquet ; et
une unité d'envoi (503), configurée pour envoyer, au SFF, un deuxième paquet obtenu par le traitement de service, dans lequel le deuxième paquet comprend un deuxième en-tête IP, une deuxième charge utile IP, et le premier en-tête de routage de segment, et le deuxième en-tête IP est placé avant la deuxième charge utile IP qui à son tour précède le premier en-tête de routage de segment dans le deuxième paquet.

11. Appareil selon la revendication 10, dans lequel le deuxième en-tête IP comprend également de premières informations de longueur, et les premières informations de longueur sont utilisées pour déterminer un emplacement du premier en-tête de routage de segment dans le deuxième paquet.

12. Appareil selon les revendications 10 ou 11, dans lequel le premier en-tête IP comprend des informations d'identification, et les informations d'identification identifient que le premier en-tête de routage de segment est défini derrière la première charge utile IP.
